# EUROPEAN PATENT APPLICATION

(11) **EP 4 664 306 A1**
(43) Date of publication of application: **17.12.2025**
(21) Application number: 23944693.3
(22) Date of filing: 12.07.2023
(51) Int. Cl.: G06F 16/13

(54) **SEARCH METHOD AND ELECTRONIC DEVICE**

(71) Applicant: Honor Device Co., Ltd., Shenzhen, Guangdong 518040 (CN)
(72) Inventor: SUN, Yichen, Shenzhen, Guangdong 518040 (CN); ZHAO, Zhenyu, Shenzhen, Guangdong 518040 (CN)
(74) Representative: MERH-IP Matias Erny Reichl Hoffmann Patentanwälte PartG mbB
(86) International application number: PCT/CN2023/107072
(87) International publication number: WO 2025/010673

(57) **Abstract**

This application provides a search method and an electronic device. The electronic device may record, in a unified manner, searchable content corresponding to each application into index information based on an index template. The index information may be stored in an index information file. Subsequently, after detecting input query content, the electronic device does not need to start a process in each application, but obtains the index information in the index information file, and then searches the index information based on the query content to obtain a search result. The search result may cover application content that matches the query content in each application. In this way, search time may be reduced and power consumption in the search may be reduced.

## Description

### TECHNICAL FIELD

This application relates to the field of terminal technologies, and in particular, to a search method and an electronic device.

### BACKGROUND

After enabling an application, an electronic device may record data generated in the application into searchable content of the application. The electronic device may start various applications by using a local search function, so that the various applications respectively search corresponding searchable content to obtain search results.

The local search function provided by the electronic device is an intelligent service. By using the local search function, the electronic device may perform a search based on query content input by a user, to obtain a search result corresponding to the query content. Then, some or all search results are displayed. A process in which the electronic device performs a search based on the query content to obtain the search result is generally divided into three basic steps. These three basic steps include query (query) understanding, query recall, and sorting.

The query understanding refers to analyzing and understanding the query content based on information such as semantics of the query content, so as to further obtain an understanding result (which may also be referred to as a query understanding result) corresponding to the query content. The understanding result may reflect an intention of the user. The query recall refers to searching the searchable content based on the understanding result, to find content related to the query content as the search result. The sorting refers to ranking the search results according to a criterion such as relevance or importance, so that the search results are arranged in descending order of relevance degrees, and search results with higher relevance can be displayed.

### SUMMARY

This application provides a search method and an electronic device. The electronic device constructs an index information file. When performing a local search, the electronic device does not need to start a process in each application, but searches the index information file based on query content by using a search application, to obtain a search result. In this way, search time may be reduced and power consumption in the search may be reduced.

According to a first aspect, this application provides a search method. The method includes: An electronic device installs a first application, where an installation package of the first application includes field information, and the field information is used to describe a first function of the first application; in response to completion of the installation of the first application, an index information file of the electronic device includes a first index value describing the first function, where the first index value is related to the field information, and the index information file further includes a second index value describing a second function of a second application; and in response to a first operation on a search application, the electronic device displays a search result, where the search result includes some or all index values in the index information file that are related to the first function, and the first application is in a non-running state.

In the foregoing embodiment, the first function of the first application may be a static function involved in the following description. The field information may be recorded into a search configuration file in the installation package of the first application. The first operation may be understood as a search operation for the search application when the first application is not running. An example of the first application may be a "settings" application, a "note" application, or the like that is described by using an example in the description. The electronic device may record the first function of the first application into the index information file. A recording manner is generating an index value (a first index value) based on the field information in the installation package of the first application. The first index value may be used to describe the first function. Similarly, for another application (for example, a second application) that is different from the first application, the electronic device may also record a static function (a second function) of the second application into the index information file. Herein, a recording manner is generating an index value (a second index value) based on the field information in the installation package of the second application. For a process of generating the index value, refer to content in the following embodiment. Details are not described herein again. Subsequently, the electronic device does not need to start the first application, that is, may search for the first function in the first application based on the index information file, and display some or all index values related to description of the first function. The search is a uniform search performed in the index information file, and does not involve content search of each application (including the first application). In this way, search time may be reduced and power consumption in the search may be reduced.

With reference to the first aspect, in some embodiments, the method further includes: In response to a second operation on the search application, the electronic device displays a search result, where the search result includes some or all index values in the index information file that are related to the first function, and the first application is in a running state.

In the foregoing embodiment, the second operation may be understood as a search operation for the search application during running of the first application. A process in which the electronic device performs a search operation in the search application to obtain a search result and performs displaying based on the search result is unrelated to whether the first application is running, because the first application does not need to be involved.

With reference to the first aspect, in some embodiments, the first index value includes an index value corresponding to a field value in the field information, and an index value corresponding to one field value includes the field value itself, or further includes an extended value of the field value.

With reference to the first aspect, in some embodiments, the method further includes:

The electronic device records the first index value and the second index value into a first sub-file of the index information file based on a first file path, where the first file path carries a name of the index information file and a name of the first sub-file.

In the foregoing embodiment, the index information file may be divided into sub-files based on a vertical domain. For example, index values created based on static function data of an application, such as the first index value and the second index value may be considered as corresponding to an "application function" vertical domain. Therefore, the first index value and the second index value may be recorded into an index information sub-file (the first sub-file) corresponding to the "application function" vertical domain. In this way, content in the index information file may be easily classified and managed.

With reference to the first aspect, in some embodiments, the first sub-file further includes a first document created by the electronic device based on the field information, where the first document includes a field in the field information describing one first function and a field value corresponding to the field, and the first document is associated with the first index value.

With reference to the first aspect, in some embodiments, the method further includes: After the electronic device runs the first application to generate first content, the index information file further includes a third index value describing the first content.

In the foregoing embodiment, the first content generated by the first application may be dynamic searchable content (including service data and dynamic function data that are generated by the first application) involved in a running process of the application in the following specification. The electronic device may record the first content generated by the first application during running into the index information file. A recording manner is generating an index value (a third index value) based on the first content. The third index value may be used to describe the first content.

With reference to the first aspect, in some embodiments, after the first application generates the first content, a new field is added to the index information file, where an index value corresponding to the new field is obtained in an index construction manner preset by the first application, and the index value corresponding to the new field is included in the third index value.

In the foregoing embodiment, the new field may be a custom field involved in the embodiment. The index construction manner corresponding to the new field is defined by the first application. In this way, a field type in the index information file may be enriched, so that richer content can be returned when a search is performed based on the index information file, or a more comprehensive search can be implemented.

With reference to the first aspect, in some embodiments, the electronic device further includes an index template, the index template includes at least one field and an index construction manner corresponding to each field in the at least one field, and the index construction manner corresponding to the field is used to create an index value for a field value corresponding to the field.

In the foregoing embodiment, the index template may record at least one field and an index construction manner corresponding to each field. The at least one field includes a system field. An index construction manner corresponding to the system field is preset in the index template.

With reference to the first aspect, in some embodiments, before the new field is added to the index information file, the method further includes: The electronic device adds the index construction manner preset by the first application to the index template.

In the foregoing embodiment, in addition to recording the system field and the index construction manner corresponding to the system field, the index template further includes a new field and an index construction manner corresponding to the new field. The index construction manner corresponding to the new field is newly added by the electronic device based on an application (for example, the first application) in the electronic device in a use process. In this way, the index template may be enriched.

With reference to the first aspect, in some embodiments, the method further includes: The electronic device adds a matching manner corresponding to the new field to the index template, where the matching manner corresponding to the new field is used to specify a manner of performing matching between the index value corresponding to the new field and query content, and the query content is content obtained when the first operation is detected in the search application.

With reference to the first aspect, in some embodiments, the method further includes: The electronic device adds a matching manner and a query understanding manner that correspond to the new field to the index template, where the query understanding manner corresponding to the new field is used to specify a manner of performing query understanding on the query content to obtain an understanding result, the matching manner corresponding to the new field is used to specify a manner of performing matching between the index value corresponding to the new field and the understanding result, and the query content is content obtained when the first operation is detected in the search application.

With reference to the first aspect, in some embodiments, the method further includes: The electronic device records the third index value into a second sub-file of the index information file based on a second file path, where the second file path carries a name of the index information file and a name of the second sub-file.

In the foregoing embodiment, the second sub-file may be an index information sub-file corresponding to a vertical domain of the first application. For example, when the first application is the "note" application, the second file may be an index information sub-file corresponding to the "note" application. The second sub-file is used to record content generated by the "note" application.

With reference to the first aspect, in some embodiments, the second sub-file further includes a second document created by the electronic device based on the first content, the second document includes a field in the first content and a field value corresponding to the field, and the second document is associated with the third index value.

With reference to the first aspect, in some embodiments, the index information file further includes a third sub-file in addition to the second sub-file, the third sub-file is used to record a fourth index value, and the fourth index value is used to describe content generated by the second application after running.

With reference to the first aspect, in some embodiments, the method further includes: The first application sends the first content to a search service application by invoking a first interface; and the search service application records the first content into the index information file.

In the foregoing embodiment, in the foregoing embodiment, the first interface may be an index construction interface involved in the specification.

With reference to the first aspect, in some embodiments, after the first application generates the first content, the method further includes: The first application records the first content into a database corresponding to the first application; a search service application obtains the first content from the database; and the search service application records the first content into the index information file.

In the foregoing embodiment, when the first interface is not configured for the first application, the search service application may obtain the first content from the database corresponding to the first application through database instrumentation, and then record the first content into the index information file.

With reference to the first aspect, in some embodiments, that the search service application records the first content into the index information file specifically includes: The search service application creates an index value for a field value corresponding to a field in the first content based on the index construction manner corresponding to the field in the first content, to obtain the third index value, where the field in the first content includes the new field, and index construction manners corresponding to different fields in the first content are different; and the search service application records the third index value into the index information file.

According to a second aspect, this application provides a search method. The method includes: An electronic device records first content generated by a first application into an index information file, where the index information file includes an index value used to describe the first content, and the index information file further includes an index value describing second content that is generated by a second application; the electronic device detects a search operation in a search application, and the electronic device searches the index information file to obtain a search result; and the electronic device performs displaying based on the search result, where the search result includes some or all index values describing the first content.

In the foregoing embodiment, the first content generated by the first application may be dynamic searchable content (including service data and dynamic function data that are generated by the first application) involved in a running process of the application in the following specification. An example of the first application may be a "settings" application, a "note" application, or the like that is described by using an example in the description. The electronic device may record the first content generated by the first application during running into the index information file. A recording manner is generating an index value based on the first content. The index value may be used to describe the first content. Similarly, for another application (for example, a second application) that is different from the first application, the electronic device may also record second content (including service data and dynamic searchable content that are generated by the second application) generated by the second application into the index information file. Herein, a recording manner is generating an index value based on the second content. For a process of generating the index value, refer to content in the following embodiment. Details are not described herein again. Subsequently, the electronic device does not need to start the first application, that is, may search for the first content in the first application based on the index information file, and display some or all index values describing the first content. The search is a uniform search performed in the index information file, and does not involve content search of each application (including the first application). In this way, search time may be reduced and power consumption in the search may be reduced.

With reference to the second aspect, in some embodiments, when the electronic device performs a search in the index information file, the first application is not running.

With reference to the second aspect, in some embodiments, after the first application generates the first content, a new field is added to the index information file, where an index value corresponding to the new field is obtained in an index construction manner preset by the first application, and the index value corresponding to the new field is included in the index value describing the first content.

In the foregoing embodiment, the new field may be a custom field involved in the embodiment. The index construction manner corresponding to the new field is defined by the first application. In this way, a field type in the index information file may be enriched, so that richer content can be returned when a search is performed based on the index information file, or a more comprehensive search can be implemented.

With reference to the second aspect, in some embodiments, the method further includes: The electronic device adds the index construction manner specified by the first application to an index template.

In the foregoing embodiment, the index template may record at least one field and an index construction manner corresponding to each field. The at least one field includes a system field, and further includes a new field. An index construction manner corresponding to the system field is preset in the index template. An index construction manner corresponding to the new field is newly added by the electronic device based on an application (for example, the first application) in the electronic device in a use process. In this way, the index template may be enriched.

With reference to the second aspect, in some embodiments, the method further includes: The electronic device adds a matching manner and a query understanding manner that correspond to the new field to the index template, where the query understanding manner corresponding to the new field is used to specify a manner of performing query understanding on the query content to obtain an understanding result, and the matching manner corresponding to the new field is used to specify a manner of performing matching between the index value corresponding to the new field and the understanding result.

With reference to the second aspect, in some embodiments, that an electronic device records first content generated by a first application into an index information file specifically includes: The electronic device records the index value describing the first content into a first sub-file of the index information file based on a first file path, where the first file path carries a name of the index information file and a name of the first sub-file.

In the foregoing embodiment, the index information file may be divided into sub-files based on a vertical domain. For example, the index value created for the first content generated by the first application may be considered as a vertical domain corresponding to the first application, and therefore may be recorded into an index information sub-file (the first sub-file) corresponding to the first application. In this way, content in the index information file may be easily classified and managed.

With reference to the second aspect, in some embodiments, the first sub-file further includes a first document created by the electronic device based on the first content, the first document includes a field in the first content and a field value corresponding to the field, and the first document is associated with an index value of a field value in the first document.

With reference to the second aspect, in some embodiments, the index template further includes a second sub-file in addition to the first sub-file, where the second sub-file is used to record an index value describing second content generated by a second application, or is further used to record a second document created by the electronic device based on the second content, the second document includes a field in the second content and a field value corresponding to the field, and the second document is associated with an index value of a field value in the second document.

With reference to the second aspect, in some embodiments, that the electronic device performs a search in the index information file specifically includes:

The electronic device performs query understanding processing on query content based on a query understanding manner corresponding to a non-empty field, to obtain an understanding result corresponding to the non-empty field, where the non-empty field is a field having an index value in the index information file, and the query content is content obtained by the electronic device after detecting a search operation in the search application; the electronic device determines, based on the understanding result corresponding to the non-empty field and in a matching manner corresponding to the non-empty field, an index value that successfully matches the understanding result corresponding to the non-empty field from index values corresponding to the non-empty field, where the index value corresponding to the non-empty field is an index value that is in the index information file and that is obtained based on an index construction manner corresponding to the non-empty field; and the electronic device determines a document associated with the successfully matched index value as a search result.

In the foregoing embodiment, the non-empty field may be a searchable field involved in the specification, and the non-empty field may be understood as M1 searchable fields involved in the specification, where M1 is an integer greater than or equal to 1.

With reference to the second aspect, in some embodiments, before the electronic device performs query understanding processing on the query content based on the query understanding manner corresponding to the non-empty field, the method further includes: The electronic device obtains a sub-file accessible by the search application from the index information file based on a file path of the sub-file that is in the index information file and that is accessible by the search application, where the sub-file accessible by the search application includes the first sub-file or the second sub-file; and the electronic device determines a field having an index value in the sub-file accessible by the search application as the non-empty field.

In the foregoing embodiment, the electronic device may configure a sub-file that is in the index information file and that is accessible by the search application. Sub-files accessible by different search applications are different. The electronic device may perform a search based on a sub-file accessible by the search application.

With reference to the second aspect, in some embodiments, when use of an error correction result is configured for the sub-file accessible by the search application, the method further includes: The electronic device performs error correction processing on the query content to obtain an error correction result; and the electronic device determines, based on the error correction result, an index value that successfully matches the error correction result from an index value recorded in the sub-file accessible by the search application.

In the foregoing embodiment, the error correction result may be understood as content obtained after error correction is performed on the query content. Whether to use the error correction result may be configured for different sub-files. Whether error correction results can be used for different vertical domains involved in the description means describing whether error correction results are used for sub-files respectively corresponding to different vertical domains.

With reference to the second aspect, in some embodiments, after the electronic device determines the document associated with the successfully matched index value as the search result, the method further includes: The electronic device aggregates, into one group, search results determined in a same sub-file accessible by the search application, and displays the search results in one display box.

With reference to the second aspect, in some embodiments, the method further includes: During running of the first application, an operation of inputting query content in the first application is detected; when the query content includes L query words, the first application defines a query understanding manner and a matching manner for performing a search based on the query content, where L is an integer greater than or equal to 2, and there is a space between two adjacent query words in the L query words when input; and the first application invokes a search service application to query, in the index information file, content that is in the first application and that is related to the query content by using the query content, and the query understanding manner and the matching manner for performing a search based on the query content.

In the foregoing embodiment, the first application may alternatively be understood as an application (an application 4) having an intra-application search function involved in the specification.

With reference to the second aspect, in some embodiments, that the first application invokes a search service application to query, in the index information file, content that is in the first application and that is related to the query content by using the query content, and the query understanding manner and the matching manner for performing a search based on the query content specifically includes: The search service performs query understanding processing on the query content by using the query understanding manner for performing a search based on the query content, to obtain an understanding result of the query content; and the search service application queries, in a first sub-file in the index information file, the content related to the query content based on the understanding result of the query content and the matching manner for performing a search based on the query content, where the first sub-file includes an index value used to describe the first content.

According to a third aspect, this application provides a search method, where the method includes: An electronic device runs a first application; the electronic device records first content generated by the first application into an index information file, where compared with a situation before the recording, a new field is added to the index information file, an index value corresponding to the new field is obtained in an index construction manner specified by the first application, and the index value corresponding to the new field is used to describe the first content; and the electronic device detects a search operation in a search application, and the electronic device performs a search in the index information file and performs displaying based on a search result, where the search result includes some or all field values describing the first content, and the some or all field values are included in the index value corresponding to the new field.

In the foregoing embodiment, the first content generated by the first application may be dynamic searchable content (including service data and dynamic function data that are generated by the first application) involved in a running process of the application in the following specification. An example of the first application may be a "settings" application, a "note" application, or the like that is described by using an example in the description. The electronic device may record the first content generated by the first application during running into the index information file. A recording manner is generating an index value based on the first content. The index value may be used to describe the first content. Similarly, for another application (for example, a second application) that is different from the first application, the electronic device may also record second content (including service data and dynamic searchable content that are generated by the second application) generated by the second application into the index information file. Herein, a recording manner is generating an index value based on the second content. For a process of generating the index value, refer to content in the following embodiment. Details are not described herein again. Subsequently, the electronic device does not need to start the first application, that is, may search for the first content in the first application based on the index information file, and display some or all index values describing the first content. The search is a uniform search performed in the index information file, and does not involve content search of each application (including the first application). In this way, search time may be reduced and power consumption in the search may be reduced. The new field may be a custom field involved in the embodiment. The index construction manner corresponding to the new field is defined by the first application. In this way, a field type in the index information file may be enriched, so that richer content can be returned when a search is performed based on the index information file, or a more comprehensive search can be implemented.

With reference to the third aspect, in some embodiments, when the electronic device performs a search in the index information file, the first application is not running.

With reference to the third aspect, in some embodiments, the method further includes: The electronic device adds the index construction manner specified by the first application to an index template.

In the foregoing embodiment, the index template may record at least one field and an index construction manner corresponding to each field. The at least one field includes a system field, and further includes a new field. An index construction manner corresponding to the system field is preset in the index template. An index construction manner corresponding to the new field is newly added by the electronic device based on an application (for example, the first application) in the electronic device in a use process. In this way, the index template may be enriched.

With reference to the third aspect, in some embodiments, the method further includes: The electronic device adds a matching manner corresponding to the new field to the index template, where the matching manner corresponding to the new field is used to specify a manner of performing matching between the index value corresponding to the new field and query content, and the query content is content obtained when a search operation is detected in the search application.

With reference to the third aspect, in some embodiments, the method further includes: The electronic device adds a matching manner and a query understanding manner that correspond to the new field to the index template, where the query understanding manner corresponding to the new field is used to specify a manner of performing query understanding on the query content to obtain an understanding result, and the matching manner corresponding to the new field is used to specify a manner of performing matching between the index value corresponding to the new field and the understanding result.

With reference to the third aspect, in some embodiments, that the electronic device records first content generated by the first application into an index information file specifically includes: The first application sends the first content to a search service application by invoking a first interface; and the search service application records the first content into the index information file.

With reference to the third aspect, in some embodiments, that the electronic device records first content generated by the first application into an index information file specifically includes: The first application records the first content into a database corresponding to the first application; a search service application obtains the first content from the database; and the search service application records the first content into the index information file.

With reference to the third aspect, in some embodiments, that the search service application records the first content into the index information file specifically includes: The search service application separately creates an index value for a field value corresponding to each field in the first content based on the index construction manner corresponding to the field in the first content, to obtain an index of each field value, where an index value of one field value includes the field value itself, or further includes an extended value of the field value, each field includes the new field, and index construction manners corresponding to different fields of various fields are different; and the search service application records the index value of each field value into the index information file, where a field corresponding to the index value corresponding to the field value in the index information file is the same as a field corresponding to the field value in the first content.

With reference to the third aspect, in some embodiments, an index construction manner corresponding to the new field is recorded in an index sub-template of the first application in the index template; the index sub-template of the first application further records an index construction manner corresponding to a system field; the index construction manner corresponding to the system field is further recorded in an index sub-template of the second application in the index template; and a field included in the index sub-template of the second application and an index construction manner corresponding to the field are the system field and the index construction manner corresponding to the system field.

With reference to the third aspect, in some embodiments, that the search service application records the index value of each field value into the index information file specifically includes: The search service application records the index value of each field value into a first sub-file of the index information file based on a file path, where the file path carries a name of the index information file and a name of the first sub-file, and the first sub-file is used to record an index value that is created based on content generated by the first application.

With reference to the third aspect, in some embodiments, the first sub-file further includes a document created by the electronic device based on the first content, the document includes a field in the first content and a field value corresponding to the field, and the document is associated with an index value of a field value in the document.

With reference to the third aspect, in some embodiments, the index template further includes a second sub-file in addition to the first sub-file, where the second sub-file is used to record an index value that is created based on content generated by another application, or is used to record an index value that is created based on second content in the first application and the another application; and the second content is content that the first application and the another application have after the two applications are installed and before the two applications are started for the first time.

In the foregoing embodiment, the second content may be static function data provided by the application.

With reference to the third aspect, in some embodiments, that the electronic device performs a search in the index information file specifically includes:

The electronic device performs query understanding processing on query content based on a query understanding manner corresponding to a non-empty field, to obtain an understanding result corresponding to the non-empty field, where the non-empty field is a field having an index value in the index information file, and the query content is content obtained by the electronic device after detecting a search operation in the search application; the electronic device determines, based on the understanding result corresponding to the non-empty field and in a matching manner corresponding to the non-empty field, an index value that successfully matches the understanding result corresponding to the non-empty field from index values corresponding to the non-empty field, where the index value corresponding to the non-empty field is an index value that is in the index information file and that is obtained based on an index construction manner corresponding to the non-empty field; and the electronic device determines a document associated with the successfully matched index value as a search result.

With reference to the third aspect, in some embodiments, before the electronic device performs query understanding processing on the query content based on the query understanding manner corresponding to the non-empty field, the method further includes: The electronic device obtains a sub-file accessible by the search application from the index information file based on a file path of the sub-file that is in the index information file and that is accessible by the search application, where the sub-file accessible by the search application includes the first sub-file or the second sub-file; and the electronic device determines a field having an index value in the sub-file accessible by the search application as the non-empty field.

With reference to the third aspect, in some embodiments, when use of an error correction result is configured for the sub-file accessible by the search application, the method further includes: The electronic device performs error correction processing on the query content to obtain an error correction result; and the electronic device determines, based on the error correction result, an index value that successfully matches the error correction result from an index value recorded in the sub-file accessible by the search application.

With reference to the third aspect, in some embodiments, after the electronic device determines the document associated with the successfully matched index value as the search result, the method further includes: The electronic device aggregates, into one group, search results determined in a same sub-file accessible by the search application, and displays the search results in one display box.

With reference to the third aspect, in some embodiments, when the search application is the first application, the sub-file accessed by the search application is the first sub-file.

According to a fourth aspect, an embodiment of this application provides an electronic device, where the electronic device includes one or more processors and a memory, the memory is coupled to the one or more processors, the memory is configured to store computer program code, the computer program code includes computer instructions, and the one or more processors invoke the computer instructions to enable the electronic device to perform the method implemented in at least one of the first aspect, the second aspect, or the third aspect.

According to a fifth aspect, an embodiment of this application provides a computer-readable storage medium, including instructions, where when the instructions are run on an electronic device, the electronic device is enabled to perform the method implemented in at least one of the first aspect, the second aspect, or the third aspect.

According to a sixth aspect, an embodiment of this application provides a chip system, where the chip system is applied to an electronic device, the chip system includes one or more processors, and the processor is configured to invoke computer instructions to enable the electronic device to perform the method implemented in at least one of the first aspect, the second aspect, or the third aspect.

According to a seventh aspect, an embodiment of this application provides a computer program product including instructions, where when the computer program product runs on an electronic device, the electronic device is enabled to perform the method implemented in at least one of the first aspect, the second aspect, or the third aspect.

It may be understood that the electronic device provided in the fourth aspect, the computer storage medium provided in the fifth aspect, the chip system provided in the sixth aspect, and the computer program product provided in the seventh aspect are all configured to perform the method provided in the embodiments of this application. Therefore, for other beneficial effects that can be achieved by the electronic device, the computer storage medium, the chip system, and the computer program product, refer to the beneficial effects in the corresponding method. Details are not described herein again.

### BRIEF DESCRIPTION OF DRAWINGS

FIG. 1 is a schematic diagram of searching for searchable content in each application;
FIG. 2 shows a process of searching for searchable content of an application based on a provider class to obtain a search result;
FIG. 3A(1)-FIG. 3C are schematic diagrams in which an electronic device obtains a static function and records static function data into index information;
FIG. 3D(1)-FIG. 3F are other schematic diagrams in which an electronic device obtains a static function and records static function data into index information;
FIG. 4A(1)-FIG. 4B are schematic diagrams in which an electronic device generates a dynamic function based on an application and records dynamic function data corresponding to the dynamic function into index information;
FIG. 5A-FIG. 5D are schematic diagrams in which an electronic device generates service data based on an application and records the service data into index information;
FIG. 6A and FIG. 6B are schematic diagrams in which an electronic device implements a local search function based on index information;
FIG. 7A(1)-FIG. 7E show example user interfaces in which an electronic device displays a search result based on a vertical domain;
FIG. 8 shows an example manner in which an electronic device generates an index based on static searchable content and dynamic searchable content;
FIG. 9 shows an example software structure framework involved in generating index information and performing a search based on the index information;
FIG. 10 shows an example software structure framework and processing procedure for creating and recording an index by using a search configuration file;
FIG. 11A and FIG. 11B show an example interaction procedure between internal modules when an index and a document are created and recorded by using a search configuration file;
FIG. 12 shows an example software structure framework and processing procedure for creating and recording an index by using a configured interface;
FIG. 13 shows an example interaction procedure between internal modules when an index and a document are created and recorded by using a configured interface;
FIG. 14 shows an example software structure framework and processing procedure for creating and recording an index through database instrumentation;
FIG. 15 shows an example interaction procedure between internal modules when an index and a document are created and recorded through database instrumentation;
FIG. 16 shows an example software structure framework and processing procedure for implementing searching by using index information;
FIG. 17 shows an example interaction procedure between internal modules when searching is implemented by using index information;
FIG. 18 is a schematic diagram of inputting query content for searching;
FIG. 19 is a schematic diagram of performing a search when query content includes L query words;
FIG. 20 is an example flowchart in which an electronic device obtains an index information file and performs a search based on the index information file; and
FIG. 21 is a schematic diagram of a structure of an electronic device according to an embodiment of this application.

### DESCRIPTION OF EMBODIMENTS

Terms used in the following embodiments of this application are merely intended to describe specific embodiments, but not intended to limit this application. As used in this specification and the appended claims of this application, singular expressions "one", "a/an", "the", "foregoing", and "this" are intended to include plural expressions, unless otherwise clearly specified in the context. It should be further understood that the term "and/or" used in this application indicates and includes any or all possible combinations of one or more listed items.

The following terms "first" and "second" are merely intended for descriptive purposes, and shall not be understood as an implication or implication of relative importance or an implicit indication of a quantity of indicated technical features. Therefore, features defined with "first" and "second" may explicitly or implicitly include one or more features. In the descriptions of the embodiments of this application, unless otherwise stated, "a plurality of" means two or more.

In a solution, an electronic device records data of an application on a per-application basis. After enabling the application, the electronic device may record data generated by the application into searchable content corresponding to the application. The searchable content may be stored in the application. For example, if the electronic device creates a new note in a "note" application, data corresponding to the note may be recorded in the "note" application. Subsequently, the electronic device may start each application to separately search for data recorded by the application.

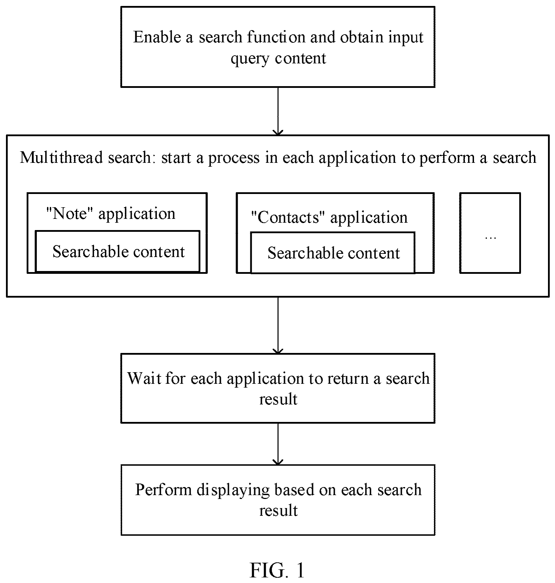

**FIG. 1** **is a schematic diagram of searching for searchable content in each application.**

As shown in FIG. 1, first, the electronic device enables a search function to obtain input query content. Then, the electronic device starts a process in each application to perform a search. The search involves a plurality of applications, and is a multithread search. In the search process, each application independently searches, by using the process of the application, the recorded searchable content for content related to the query content. The searchable content recorded by the application includes data generated by the application. A search result of performing a search by the application is obtained based on the content related to the query content. For example, the application with a process being started may include an application such as a "note" application or a "contacts" application. The "note" application and the "contacts" application may respectively search searchable content recorded by the two applications for content related to the query content, and separately return a search result. The electronic device waits for each application to return a search result. After obtaining the search result returned by each application, the electronic device performs displaying based on the search result.

The search function may be integrated into a search application, and a display form of the search application in the electronic device includes but is not limited to an input box, an icon, or the like. The application with a process being started may be referred to as a searched application.

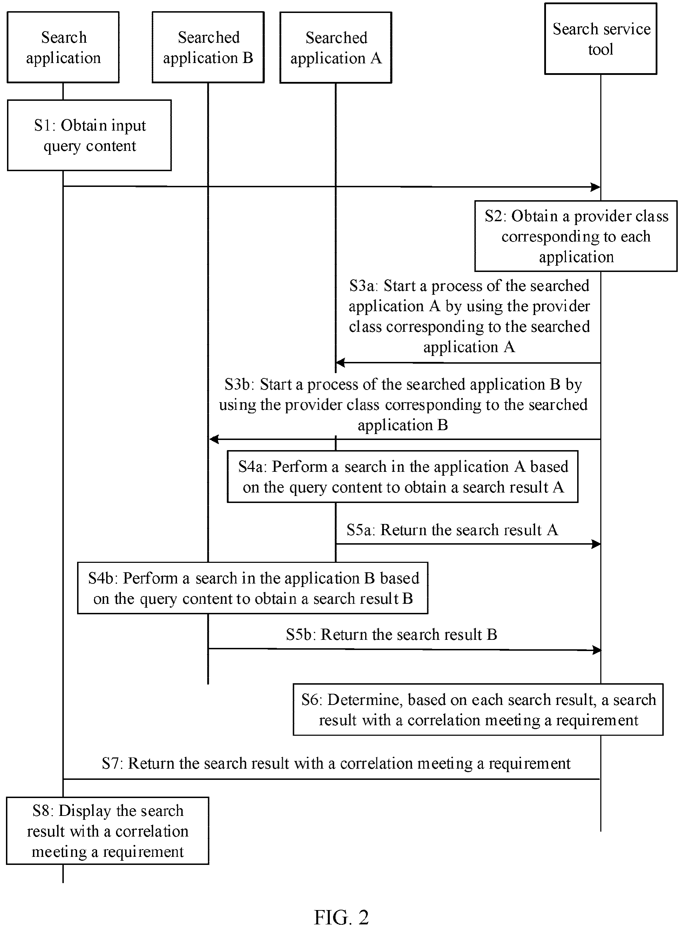

In some possible cases, the electronic device may start the process of each application by using a provider class corresponding to the application for searching. The provider class is provided by an application developer, and the provider class may be recorded into a search service tool during application installation. The search service tool may be invoked by the search application to perform an operation related to the search, so that the electronic device completes the search. The following describes in detail, based on FIG. 2, how an electronic device searches for data recorded in an application based on a provider class to obtain and display a search result.

**FIG. 2** **shows a process of searching for searchable content of an application based on a provider class to obtain a search result.**

As shown in FIG. 2, for a process in which the electronic device searches for content recorded in the application based on the provider class to obtain and display a search result, refer to the following descriptions of step S1-step S8.

S1: A search application obtains input query content.

The search application may provide a user with a plurality of manners of inputting the query content, including but not limited to voice input, keyboard input, or the like.

S2: The search application obtains a provider class corresponding to each application by using a search service tool.

The provider class corresponding to each application may include a provider class corresponding to a searched application A and a provider class corresponding to a searched application B. An example of the searched application A may be the foregoing "note" application. An example of the searched application B may be the foregoing "contacts" application.

Subsequently, the search service tool separately starts a process in each application by using the provider class corresponding to each application. Each application searches, based on the process corresponding to the application, searchable content recorded by the application for content related to the query content, to obtain a search result, and returns the search result to the search service tool. The following describes a process by using the searched application A and the searched application B as an example.

For a process in which the searched application A obtains the search result and returns the search result to the search service tool, refer to the following descriptions of steps S3a-S5a.

S3a: The search service tool starts a process of the searched application A by using the provider class corresponding to the searched application A.

S4a: The searched application A performs a search in the application A based on the query content to obtain a search result A.

S5a: The searched application A returns the search result A to the search service tool.

For a process in which the searched application B obtains the search result and returns the search result to the search service tool, refer to the following descriptions of steps S3b-S5b.

S3b: The search service tool starts a process of the searched application B by using the provider class corresponding to the searched application B.

S4b: Perform a search in the application B based on the query content to obtain a search result B.

S5b: The searched application B returns the search result B to the search service tool.

S6: The search service tool determines, based on each search result, a search result with a correlation meeting a requirement.

In some possible cases, the search result with a correlation meeting a requirement may include first Q search results having a highest correlation with the query content in various search results. Q is an integer greater than or equal to 1.

The search service tool waits for each application to return a search result. After obtaining the search result returned by each application, the search service tool determines, based on each search result, a search result with a correlation meeting a requirement.

S7: The search service tool returns the search result with a correlation meeting a requirement to the search application.

S8: The search application displays the search result with a correlation meeting a requirement.

It can be learned that the electronic device needs to start processes of a plurality of applications to complete one search, and when the electronic device runs many processes, a problem of high power consumption is caused. In addition, when performing a search, the electronic device can determine the search result with a correlation meeting a requirement based on each search result only after each application returns a search result that is obtained through searching by each application. This causes a problem of a long delay.

To resolve the foregoing problems of high power consumption and a long delay caused by starting each application during searching, a search method is proposed. The electronic device may record, in a unified manner, searchable content corresponding to each application into index information based on an index template. The index information may be stored in an index information file. Subsequently, after detecting input query content, the electronic device does not need to start a process in each application, but obtains the index information in the index information file, and then searches the index information based on the query content to obtain a search result. The search result may cover application content that matches the query content in each application. For example, the electronic device generates one piece of contact information (for example, lily, 122XXX1) in the "contacts" application. In addition, the electronic device generates an email in an "email" application, and email content also includes the contact information. The electronic device may record, in a unified manner, the contact information and the email content into the index information based on the index template. Subsequently, when the query content (for example, lily, 122XXX1) is detected, and when the "contacts" application and the "email" application are not started, contact information and an email that include "lily, 122XXX1" may also be found in the index information. It should be understood herein that the electronic device represents one piece of searchable content by using a field and a field value corresponding to each field. Fields may be used to describe properties of different parts of the searchable content. The fields may include a title, a description, a time, and the like. Field values may be used to describe specific values of different parts of the searchable content. One function of the index template is to provide a specific rule that enables the electronic device to create an index for a field value based on a field corresponding to each field value in the searchable content, to obtain an index corresponding to each field value in the searchable content. The index corresponding to each field value in the searchable content may also represent the searchable content. An index corresponding to one field value may be used to represent the field value. The index corresponding to one field value may include the field value itself, or may further include another extended value (for example, an extended value such as a word segment of the field value) that may represent the field value and that is derived from the field value. A function of the index information is to aggregate indexes corresponding to various searchable content to facilitate use of the indexes (for example, index-based searching). An index corresponding to one piece of searchable content is an index corresponding to each field value in the searchable content.

In some possible cases, the index corresponding to the field value may also be referred to as an index value corresponding to the field value or an index value of the field value.

In some possible cases, a format of a file for storing the index template and the index information may be a lucene format.

**The following describes the index template and the index information in detail.**

The index template defines a rule for creating an index and using the index. The index template may include at least one field and an attribute corresponding to each field.

**Table 1 shows an example index template.**

**Table 1**

| Field | Index construction manner (attribute corresponding to a field) | Matching manner (attribute corresponding to a field) | Query understanding manner (attribute corresponding to a field) |
|---|---|---|---|
| Title | Taking a field value + preprocessing + word segmentation + Pinyin of word segments + Pinyin initials | "and" matching of word segments and prefix matching | Preprocessing + word segmentation + taking a synonym |
| Description | Taking a field value + preprocessing + word segmentation + Pinyin of word segments | "or" matching of word segments and prefix matching | Preprocessing + word segmentation + taking a synonym |
| Phone number | Taking a field value | Full matching | Preprocessing |
| ... | ... | ... | ... |

As described in Table 1, fields in the index template may include a title, a description, a phone number, and the like. Attributes corresponding to the index may include the index construction manner and the matching manner, and may further include the query understanding manner and the like.

**The following describes the index template in detail with reference to Table 1.**

A field in the index template specifies a field that may be used to generate an index in the searchable content, and a field value. For example, the electronic device generates one piece of contact information by using the "contacts" application. The contact information may include a "title" field and a field value (for example, a "repair phone") corresponding to the "title" field, and may further include a "phone number" field and a field value (for example, "152XXX") corresponding to the "phone number" field. When the index template includes the "title" field and the "phone number" field, the electronic device may create an index based on the field value corresponding to the "title" field and the field value corresponding to the "phone number" field in the contact information. For detailed description of index creation, refer to the following description of the attribute corresponding to each field.

The attribute corresponding to each field in the index template may include the index construction manner corresponding to the field and the matching manner corresponding to the field. One field corresponds to one index construction manner and one matching manner.

The index construction manner corresponding to one field is used to indicate how to create, by using a field value corresponding to the field, an index corresponding to the field value. The index corresponding to the field value may be used to represent the field value. For other description of the index, refer to the foregoing content. Details are not described herein again. The index construction manner of one field may include taking a field value. A manner of taking the field value may be a default manner, which is not emphasized in the following description. In addition to taking the field value, the index construction manner corresponding to one field may further include but is not limited to one or more of the following construction forms.

**Index construction form 1:** preprocessing.

Preprocessing in the index construction manner may be used to preprocess a field value to obtain a preprocessing result that is more compliant with the specification herein. The preprocessing in the index construction manner includes one or more of performing uppercase and lowercase unification on a field value, converting a double-byte character in the field value into a single-byte character, deleting a space symbol in the field value, and converting a traditional Chinese character in the field value into a simplified Chinese character.

**Index construction form 2:** word segmentation.

Word segmentation in the index construction manner refers to dividing a field value into R words by using a word segmentation technology. N may be an integer greater than or equal to 1. For example, word segmentation is performed on the field value "repair phone", and an obtained word segmentation result may include two words, which are respectively "repair" and "phone".

**Index construction form 3:** Pinyin of word segments.

Pinyin of word segments in the index construction manner refers to generating a Pinyin of each word segment corresponding to the field value. For example, for the field value "repair phone", when a word segmentation result is "repair" and "phone", a result of Pinyin of word segments is "weixiu" and "dianhua", respectively.

**Index construction form 4:** Pinyin initials. A result of Pinyin initials includes the first letter of Pinyin of each character in the field value.

It should be understood herein that the foregoing preprocessing result, result of word segmentation, result of Pinyin of word segments, and result of Pinyin initials may be all referred to as extended values. In addition to the foregoing index construction forms, one index construction manner may further include another index construction form. This is not limited in this embodiment of this application.

An example in which an index is created for one field value corresponding to the "title" field based on the index construction manner corresponding to the "title" field is used herein for illustrative description. For example, the index construction manner corresponding to the "title" field is "taking a field value + preprocessing + word segmentation + Pinyin of word segments + Pinyin initials". One field value corresponding to the "title" field is "repair phone" in the foregoing contact information. In this case, an index of the field value of "repair phone" created based on the index construction manner corresponding to the "title" field is "repair phone (field value) + repair phone (preprocessing result) + repair and phone (word segmentation result) + weixiu and dianhua (result of Pinyin of word segments) + wxdh (result of Pinyin initials)".

It should be understood herein that index construction manners of different fields may be the same or may be different. An index construction manner corresponding to each field may be set based on a meaning of the field. As shown in Table 1, the index construction manner corresponding to the "title" field may be: "taking a field value + preprocessing + word segmentation + Pinyin of word segments + Pinyin initials". An index construction manner corresponding to the "description" field may be "taking a field value + preprocessing + word segmentation + Pinyin of word segments". An index construction manner corresponding to the "phone number" field may be: taking a field value. The "title" field may generally be an application name, an application function name, a contact name, a file (such as a note or an email) name, or the like. The "description" field may generally be a file body, a description of an application name, a function name, or the like, or the like.

A matching manner corresponding to one field may be used to indicate how to determine, when matching is performed between the query content and an index corresponding to the field, a field value or an extended value (for example, an extended value such as a word segment of the field value) that successfully matches the query content.

The matching manner corresponding to one field may include but is not limited to one or more of the following matching forms.

**Matching form 1:** "and" matching of word segments.

The "and" matching of word segments refers to determining a successfully matched index (a field value or an extended value) by performing matching between the word segmentation result of the query content and the index corresponding to the field, and means that a condition for successfully matching a field value or an extended value with the query content is that the field value or the extended value includes a complete word segmentation result of the query content. An example in which the query content is "repair phone" is used herein for description. When the word segmentation result of the query content is "repair" and "phone", the successfully matched field value or extended value needs to include both of the two word segments of "repair" and "phone".

**Matching form 2:** "or" matching of word segments.

The "or" matching of word segments refers to determining a successfully matched index (a field value or an extended value) by performing matching between the word segmentation result of the query content and the index corresponding to the field, and means that a condition for successfully matching a field value or an extended value with the query content is that the field value or the extended value includes at least one word segmentation result of the query content. An example in which the query content is "repair phone" is used herein for description. When the word segmentation result of the query content is "repair" and "phone", the successfully matched field value or extended value needs to include at least one of the two word segmentation results of "repair" and "phone".

**Matching form 3:** prefix matching.

The prefix matching refers to determining a successfully matched index (including a field value or an extended value) by performing matching between the query content or an understanding result capable of representing the query content and the index corresponding to the field, and means that a condition for successfully matching a field value or an extended value with the query content is that the field value or the extended value includes the query content. An example in which the query content is "repair phone" is used herein for description. The successfully matched field value or extended value needs to include at least the query content of "repair phone".

The understanding result representing the query content may include but is not limited to one or more of the following content: error correction content obtained after error correction is performed on the query content, and content obtained after preprocessing is performed on the query content (preprocessed query content, which is referred to as preprocessed content for short).

**Matching form 4:** full matching.

The full matching refers to determining a successfully matched index (a field value or an extended value) by performing matching between the query content or an understanding result capable of representing the query content and the index corresponding to the field, and means that a condition for successfully matching a field value or an extended value with the query content is that the field value or the extended value is the same as the query content. An example in which the query content is "repair phone" is used herein for description. The successfully matched field value or extended value is the same as the query content of "repair phone".

In addition to the foregoing matching forms, another matching form may be included. This is not limited in this embodiment of this application. For example, "and" matching of synonyms and "or" matching of synonyms may be further included. The synonym may be obtained after a synonym is separately taken based on each word segmentation result of the query content. Descriptions of the "and" matching of synonyms and the "or" matching of synonyms are similar to those of the "and" matching of word segments and the "or" matching of word segments. Refer to the foregoing descriptions and replace word segments with synonyms.

It should be understood herein that matching manners of different fields may be the same or may be different. As shown in Table 1, the matching manner corresponding to the "title" field may be "'and' matching of word segments and prefix matching". The matching manner corresponding to the "description" field may be "'or' matching of word segments and prefix matching". The matching manner corresponding to the "phone number" field may be full matching.

In some possible cases, the attribute corresponding to each field in the index template may further include a query understanding manner corresponding to the field. One field corresponds to one query understanding manner.

The query understanding manner corresponding to one field is used to indicate how to understand the query content before matching is performed between the query content and an index corresponding to the field, to obtain an understanding result corresponding to the query content. The understanding result may represent the query content.

In some possible cases, the electronic device may separately perform, based on the understanding result and the query content, matching with the index corresponding to the field in the matching manner corresponding to the field, to determine the successfully matched field value or extended value.

In some other possible cases, the electronic device may use the understanding result to represent the query content, and perform matching with the index corresponding to the field in the matching manner corresponding to the field, to determine the successfully matched field value or extended value.

The query understanding manner corresponding to one field may include but is not limited to one or more of the following understanding forms.

**Understanding form 1:** preprocessing.

Preprocessing in the query understanding manner refers to preprocessing the query content to obtain preprocessed query content (which is referred to as preprocessed content for short).

**Understanding form 2:** word segmentation.

Word segmentation in the query understanding manner refers to performing word segmentation based on the preprocessed content, to obtain a word segmentation result corresponding to the query content.

**Understanding form 3:** taking a synonym.

Taking a synonym in the query understanding manner refers to taking a synonym based on a word segmentation result, to obtain a synonym corresponding to each word segmentation result of the query content.

In addition to the foregoing understanding forms, another understanding form may be included. This is not limited in this embodiment of this application. For example, query error correction processing may be further included, that is, error correction processing is performed on the query content to obtain error-corrected content.

It should be understood herein that, generally, the query understanding manner corresponding to one field is mutually associated with the matching manner corresponding to the field. For a matching type that exists in one matching manner, a corresponding understanding manner may be configured for the matching type in the query understanding manner. For example, when the matching form in the matching manner includes word segment matching (including "and" matching of word segments and "or" matching of word segments), the query understanding manner may include word segmentation. When the matching form in the matching manner includes prefix matching or full matching, the query understanding manner may include one or more of preprocessing and error correction.

Therefore, it may be understood that, in some possible cases, the index template may not include a query understanding manner corresponding to each field, and instead, when a matching manner corresponding to each field is obtained, query understanding is performed on the query content based on the matching manner.

In some other possible cases, the query understanding manner and the matching manner that correspond to the field may be defined separately, so that the index template may include the query understanding manner and the matching manner that correspond to each field. In this way, an attribute corresponding to each field is easily managed and used.

It should be understood herein that matching manners of different fields may be the same or may be different. As shown in Table 1, the query understanding manner corresponding to the "title" field may be "preprocessing + word segmentation + taking a synonym". The query understanding manner corresponding to the "description" field may be "preprocessing + word segmentation + taking a synonym". The query understanding manner corresponding to the "phone number" field may be preprocessing.

**The index information may include an index corresponding to each field value. In some possible cases, in addition to an index corresponding to each field, the index information may further include document information of a document to which each field value belongs.**

For related description of the index corresponding to each field, refer to the foregoing content. Details are not described herein again.

The following describes the document information in detail.

The document information records the document to which each field belongs. One piece of searchable content may correspond to at least one document. One document may include fields from the same piece of searchable content and field values corresponding to the fields. The index (including each field value and an extended value thereof) corresponding to each field value in one document establishes a relationship with the document. When the search result is a document, and when the electronic device determines a field value or an extended value that successfully matches the query content, a document with which the field value or the extended value is associated may be mapped and recalled.

In some possible cases, a manner in which one document is associated with the index (including each field value and an extended value thereof) corresponding to each field value in the document includes: setting a same identifier for the document, each field value in the document, and the extended value of the field value, so that the electronic device can find a document of the same identifier by using the identifier of the field value or the extended value.

During use, the electronic device may generate a large amount of searchable content by using each application, and record the large amount of searchable content into index information based on a corresponding index generated by an index template. Therefore, indexable information may store a large quantity of indexes. To facilitate management and searching for the indexes, in some possible cases, the electronic device may divide the index information based on a vertical domain to obtain K index information fragments. One index information fragment corresponds to one vertical domain. It may alternatively be understood that one piece of searchable content may correspond to one vertical domain. When an index corresponding to the searchable content is recorded, the index corresponding to the searchable content may be recorded into an index information fragment corresponding to the vertical domain (corresponding to the searchable content).

The vertical domain may be used to describe a type of the searchable content. It may alternatively be understood that the vertical domain corresponding to one piece of searchable content may be used to indicate an application from which the searchable content comes, or a specific index information fragment to which recording is made. A quantity of vertical domains and a manner of division into vertical domains may be determined based on an actual use situation, and should not constitute a limitation on this embodiment of this application.

In some possible cases, the index information is recorded into an index information file. If there are L1 vertical domains, the index information file may include L1 index information sub-files, and one index information sub-file may be considered as one index information fragment. One index information sub-file corresponds to one vertical domain. The vertical domain corresponding to one index information sub-file may be represented by a name of the index information sub-file. The vertical domain corresponding to one index information sub-file indicates a type of searchable content that is recorded by using the index information sub-file, that is, an index in the index information sub-file is an index created based on the searchable content. Each index information sub-file has one file path, and the file path corresponding to each index information sub-file may be used to find the index information sub-file. The file path that each index information sub-file has may include a name of the index information file, and further includes a name of the index information sub-file.

In some possible cases, the electronic device may ensure that content generated by each application after being enabled separately corresponds to one vertical domain, that is, the electronic device may separately create one index information sub-file for each application, and the content generated by each application after being enabled may be separately recorded into the index information sub-file corresponding to each application. It may be understood herein that each application has one corresponding index information sub-file. For example, for the "note" application, when content generated in the "note" application is considered as one vertical domain (for example, a "note" vertical domain), the electronic device may record the content (for example, a note) generated in "note" into an index information sub-file corresponding to the "note" application. A name of the index information sub-file corresponding to the "note" application may represent a vertical domain corresponding to the index information sub-file. In this way, by using the name of the index information sub-file corresponding to the "note" application, it may be determined that the index recorded in the index information sub-file is created based on the content (including the following dynamic function and service data) generated in the "note" application.

The electronic device may further ensure that content (for example, static function data) that each application has after installation and before the first enabling separately corresponds to at least one vertical domain. For example, a static function may correspond to one vertical domain. The electronic device may create one index information sub-file for the static function, and record the static function data into an index information sub-file corresponding to the static function.

It can be learned from the foregoing content that, even if the searchable content comes from different applications, the electronic device may also create an index for a same field in the different searchable content in a same manner, and record the same field in the index information in a unified manner. The searchable content is easily stored and managed. In addition, the electronic device may also change an attribute (for example, an index construction manner, a matching manner, or a query understanding manner) of one field in the index template, helping manage attributes of different fields.

In some possible cases, the searchable content that the electronic device may record into the index information includes: content (which may also be referred to as static searchable content) that the application already has after the electronic device downloads the application and before the electronic device starts the application for the first time; and content (which may also be referred to as dynamic searchable content) that is generated by the electronic device in a process of using the application when the application is enabled.

The static searchable content of the application may include static function data of the application.

The static function data of the application includes each field describing each static function in the application and a field value corresponding to the field. Each field describing a static function may include a "title" field (indicating a static function name), an "icon" field (indicating an icon address of the static function), a "jump link" field (used to open a page corresponding to the static function), and the like. The icon address may be used to find an icon.

The static function of the application is a function that the application has after the application is installed and before the application is enabled for the first time, and the static function is an inherent function of the application, and does not change because a page on which the application is enabled varies.

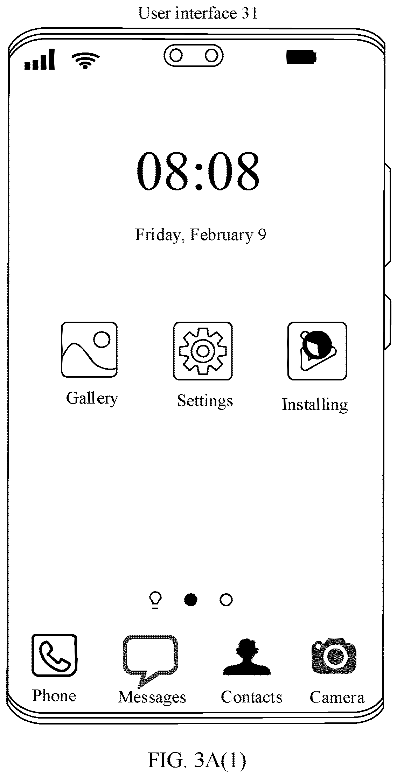

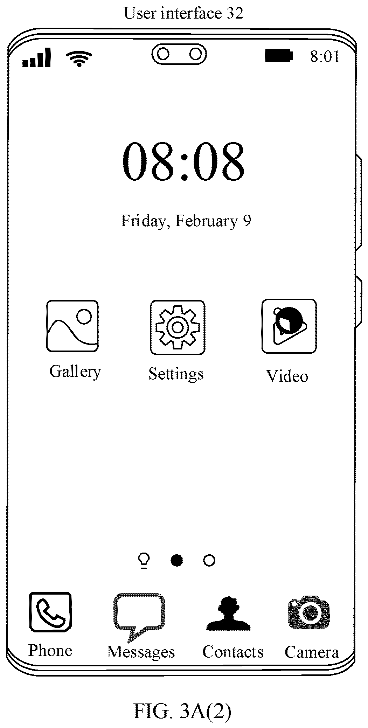

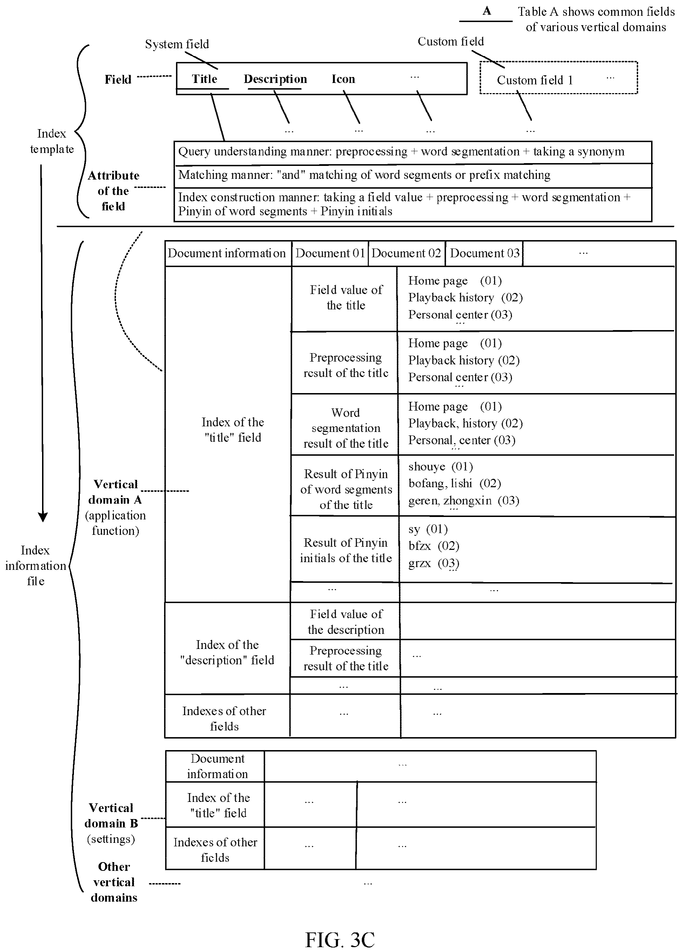

For example, a "create note" function and a sharing function in the "note" application each may be referred to as a static function. Each field describing the "create note" function and a field value corresponding to the field, each field describing the "sharing" function and a field value corresponding to the field, and each field of other static function data (in the "note" application) and a field value corresponding to the field may be considered as static function data of the "note" application. For another example, a playback history viewing function in a "video" application is referred to as a static function. Each field describing the playback history viewing function and a field value corresponding to the field may be considered as content in the static function data of the "video" application. FIG. 3A(1)-FIG. C below show an example static function, and is an example diagram in which an electronic device records static function data into index information. For related descriptions of the static function data, refer to FIG. 3A(1)-FIG. 3C below. Details are not described herein again.

The dynamic searchable content of the application may include dynamic function data of the application, service data of the application, and the like.

The dynamic function data of the application includes each field describing the dynamic function of the application and a field value corresponding to the field. In some possible cases, the dynamic function data may further include a vertical domain corresponding to the dynamic function. Each field describing a dynamic function may include a "title" field (indicating a dynamic function name), an "icon" field (indicating an icon address of the dynamic function), and the like.

The dynamic function of the application is a function generated in a process of using the application after the application is enabled, and the dynamic function is generated with a page on which the application is enabled. Both the dynamic function and the foregoing static function are functions of the application. However, the dynamic function is different from the foregoing static function. The static function is a function that the application has after the application is installed and before the application is enabled for the first time. However, the dynamic function is a function generated only after the application is enabled.

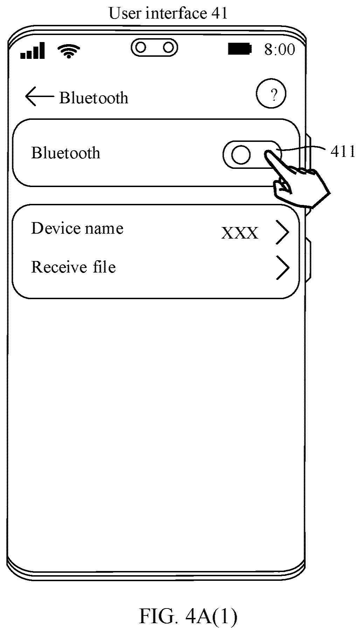

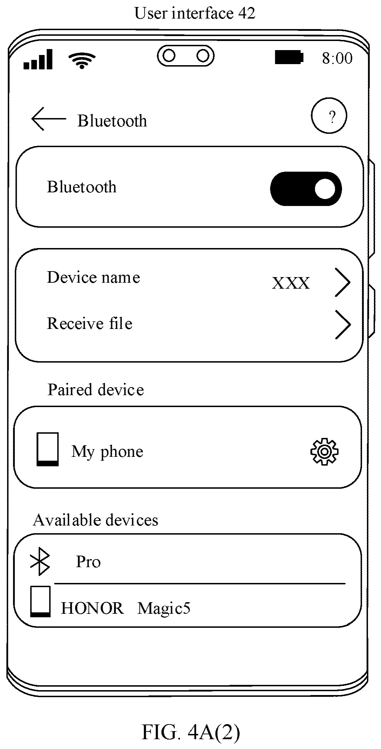

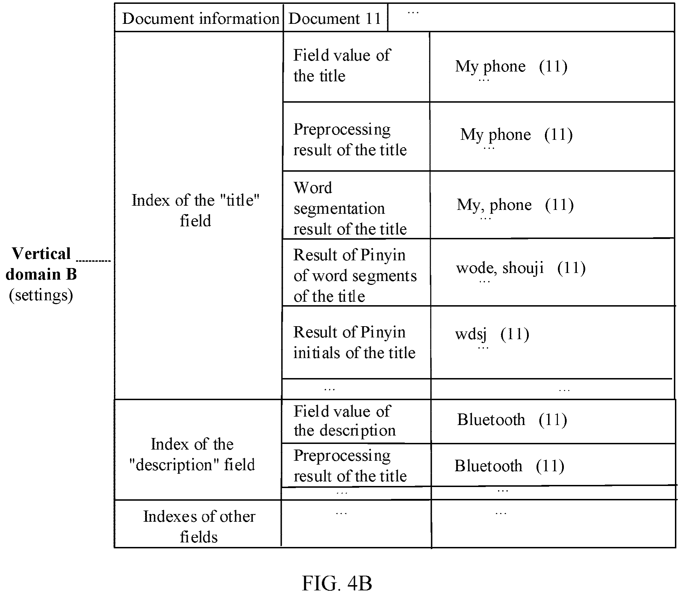

For example, when the electronic device enables the "create note" function of the "note" application to create a new note, functions (such as a "save" function and a "withdraw" function) included in the page involved in creating a new note may be referred to as dynamic functions. For another example, when the electronic device enables a playback page of the "video" application, functions (such as a "pause" function) included in the playback page may be referred to as dynamic functions. FIG. 4A(1) and FIG. 4A(2) and FIG. 4B below show an example dynamic function, and are an example diagram in which an electronic device records dynamic function data into index information. For related descriptions of the dynamic function data, refer to FIG. 4A(1) and FIG. 4A(2) and FIG. 4B below. Details are not described herein again.

Service data of the application is data generated based on functions (including a static function and a dynamic function) of the application. The service data may include each field describing the service data and a field value corresponding to the field. In some possible cases, the service data may further include a vertical domain corresponding to the service data.

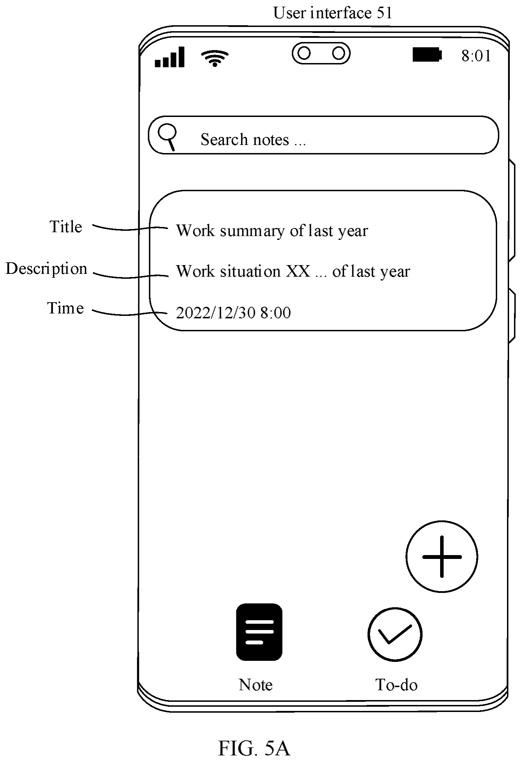

For example, a note is generated based on the "create note" function of the "note" application. The note may be considered as service data of the "note" application. FIG. 5A-FIG. 5D below show example service data, and are example diagrams in which an electronic device records the service data into index information. For related descriptions of the service data, refer to FIG. 5A-FIG. 5D. Details are not described herein again.

It should be understood herein that the dynamic searchable content and the static searchable content of the electronic device may further include other content in addition to including the foregoing content. This is not limited in this embodiment of this application. For example, the static searchable content may further include static data. The static data is data that the application already has after the electronic device downloads the application and before the electronic device starts the application for the first time.

**FIG. 3A(1)-FIG. 3C** **are schematic diagrams in which an electronic device obtains a static function and records static function data into index information.**

In some possible cases, the electronic device may obtain the static function data of the installed application when installing the application. Then, the electronic device may record the static function data into the index information.

An example in which an electronic device installs a "video" application, and records static function data corresponding to a static function of the "video" application into index information is used below for description.

As shown in FIG. 3A(1) and FIG. 3A(2), a user interface 31 is an example user interface (page) involved when an electronic device installs a "video" application. A user interface 32 is an example user interface involved after the electronic device completes the installation of the "video" application. In a process in which the electronic device installs the "video" application, the electronic device may obtain static function data corresponding to the "video" application. Then, after the installation of the "video" application is completed, the electronic device may record static function data corresponding to the "video" application into the index information.

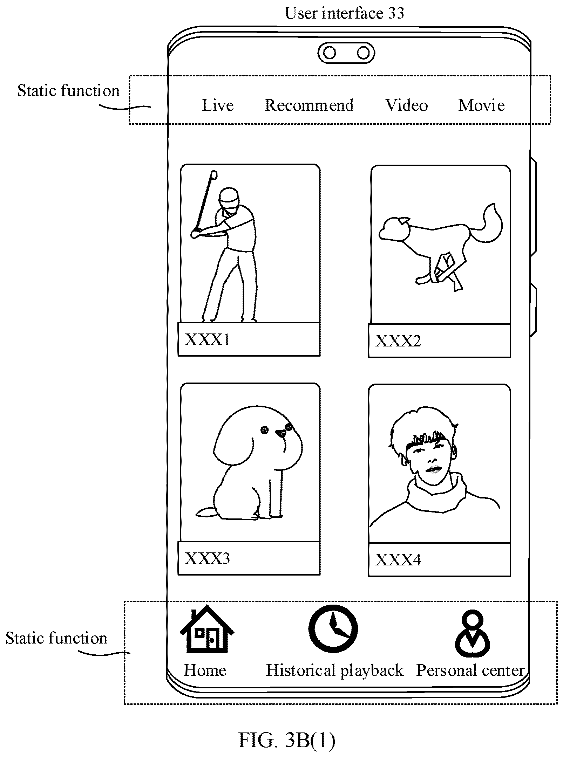

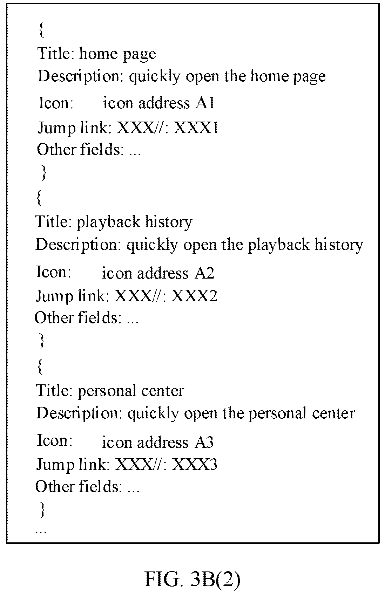

FIG. 3B(1) shows some static functions in the "video" application. As shown in FIG. 3B(1), in a user interface 33, the static functions of the "video" application may include a "home page" function, a "historical playback" function, and a "personal center" function, and may further include a "live streaming" function, a "recommendation" function, and the like.

Herein, content in the static function data is described in detail by using an example in which the static function data of the "video" application includes field values describing the static functions such as the "home page" function, the "historical playback" function, and the "personal center" function, and field values corresponding to various fields.

FIG. 3B(2) shows a piece of example static function data of the "video" application. The static function data includes each field describing the "home page" function and a field value corresponding to the field, each field describing the "historical playback" function and a field value corresponding to the field, and each field describing the "personal center" function and a field value corresponding to the field. Fields describing the static functions in the "video" application may include but are not limited to fields such as the "title" field (indicating a static function name), the "description" field (indicating a function of the static function), the "icon" field (indicating an icon address of the static function), and a "jump link" field (used to open a page corresponding to the static function).

It should be noted herein that an icon address A1 mentioned in FIG. 3B(2) may be an icon address corresponding to the "home page" function, and the icon address corresponding to the "home page" function may be used to find an icon of the "home page" function based on the address. An icon address A2 and an icon address A3 may be respectively used to find an icon of the "playback history" function and an icon of the "personal center" function.

In some other possible cases, an icon address corresponding to one static function may not be an address of an icon of the static function, but may alternatively be an address of an icon of an application in which the static function is located, and be used to find the icon of the application in which the static function is located.

When the installation of the "video" application is completed, the electronic device may record static function data of the "video" application into the index information based on the index template. For such a process, refer to the following description of FIG. 3C.

In FIG. 3C, an example in which the electronic device generates an index for a field value corresponding to a "title" field of each static function based on the index template, and records the index into the index information is used for description. For a process of recording a field value corresponding to another field into the index information, refer to the description of FIG. 3C. Details are not described herein again.

As shown in FIG. 3C, the index template records each field and an attribute corresponding to the field. For a related description of the index template, refer to the foregoing content. Details are not described herein again.

The "title" field is used as an example. An index construction manner corresponding to the "title" field is "taking a field value + preprocessing + word segmentation + Pinyin of word segments + Pinyin initials". In this case, when the electronic device creates an index based on a field value of each "title" field in the static function data, the index needs to include the field value, a preprocessing result of the field value, a word segmentation result of the field value, a Pinyin result of the field value, and a result of Pinyin initials of the field value. As shown in FIG. 3C, the electronic device may further record, in a unified manner, a field value and an extended value that correspond to the "title" field in the static function data to a location corresponding to the index of the "title" field. Herein, an example in which a vertical domain corresponding to the static function data is an "application function" vertical domain (a vertical domain A) is used for illustrative display.

In some possible cases, the electronic device may further generate documents (including a document 01, a document 02, and a document 03) corresponding to various static functions, and one static function corresponds to one document. The document corresponding to one static function records a field and a field value that describe the static function in the static function data. The document corresponding to one static function may be associated with the field value describing the static function and an extended value of the field value.

When index information is recorded into an index information file, and the index information file is divided into different index information sub-files based on a vertical domain, the electronic device may record, into an index information sub-file corresponding to an "application function" vertical domain, an index and a document that are created based on the static function data of the "video" application. For example, the index recorded into the index information sub-file corresponding to the "application function" vertical domain may be index information corresponding to the "application function" vertical domain shown in FIG. 3C.

Subsequently, the electronic device may further record, into the index information sub-file corresponding to the "application function" vertical domain, an index and a document that are created based on static function data of another application.

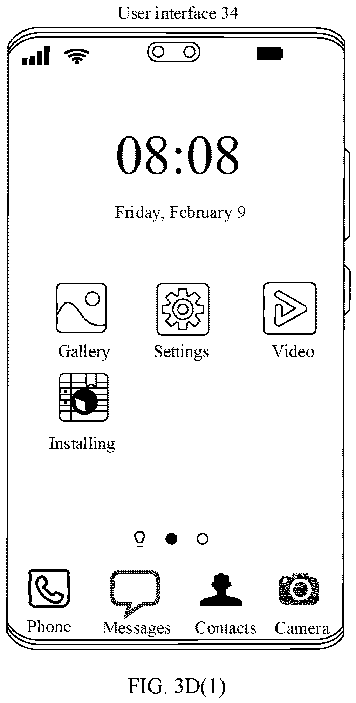

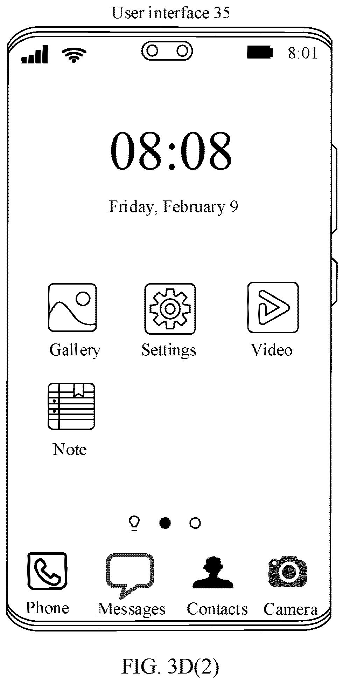

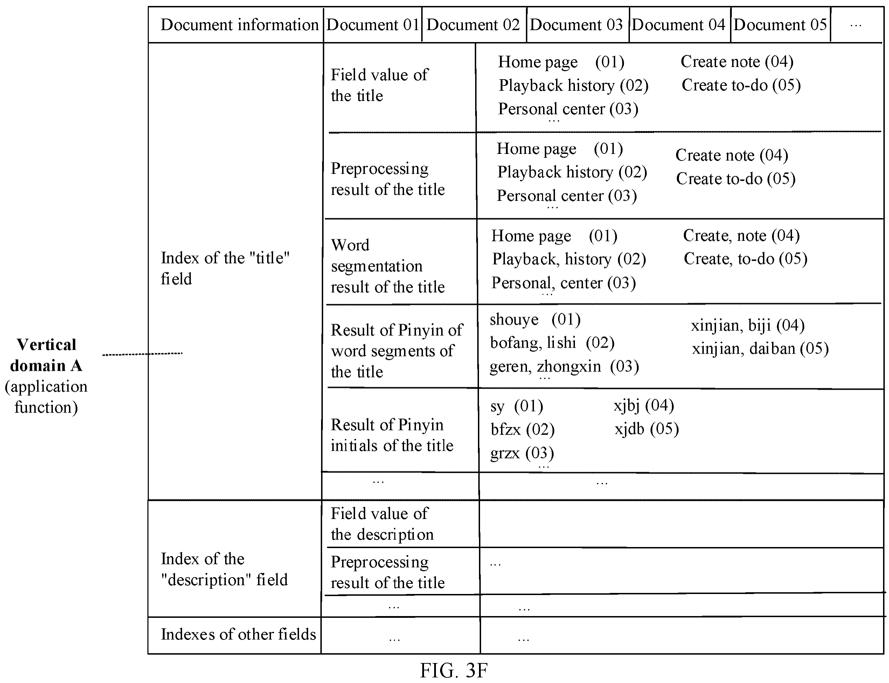

**FIG. 3D(1)-FIG. 3F** **are other schematic diagrams in which an electronic device obtains a static function and records static function data into index information.**

An example in which the electronic device installs the "note" application, and records static function data corresponding to a static function of the " you worry" application into the index information sub-file corresponding to the "application function" vertical domain is used below for description.

As shown in FIG. 3D(1) and FIG. 3D(2), a user interface 34 is an example user interface involved when the electronic device installs the "note" application. A user interface 35 is an example user interface involved after the electronic device completes the installation of the "note" application. In a process in which the electronic device installs the "note" application, the electronic device may obtain static function data corresponding to the "note" application. Then, after the installation of the "note" application is completed, the electronic device may record static function data corresponding to the "note" application into the index information.

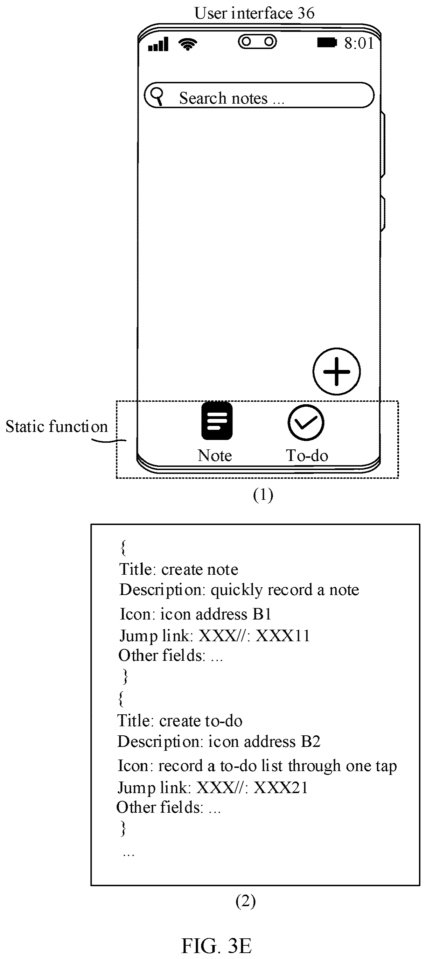

(1) in FIG. 3E shows some static functions in the "note" application. As shown in (1) in FIG. 3E, in a user interface 36, the static functions of the "note" application may include a "create note" function, a "create to-do" function, and the like.
(2) in FIG. 3Eshows a piece of example static function data of the "note" application. The static function data includes each field describing the "create note" function and a field value corresponding to the field, and each field describing the "create to-do" function and a field value corresponding to the field. Fields describing the static functions in the "note" application may include but are not limited to fields such as the "title" field (indicating a static function name), the "description" field (indicating a function of the static function), the "icon" field (indicating an icon address of the static function), and a "jump link" field (used to open a page corresponding to the static function).

For meanings of various fields and field values, refer to the foregoing description of FIG. 3B(2). Details are not described herein again.

When the installation of the "note" application is completed, the electronic device may create an index for the static function data of the "note" application based on the index template, and record the created index into the index information sub-file corresponding to the "application function" vertical domain.

FIG. 3F is a schematic diagram of index information corresponding to the "application function" vertical domain. Compared with FIG. 3C, creating an index and a document based on the static function data of the "note" application is newly added to the index information corresponding to the "application function" vertical domain.

When index information is recorded into an index information file, and the index information file is divided into different index information sub-files based on a vertical domain, the electronic device may record, into an index information sub-file corresponding to an "application function" vertical domain, an index and a document that are created based on the static function data of the "note" application.

**FIG. 4A(1)-FIG. 4B** **are schematic diagrams in which an electronic device generates a dynamic function based on an application and records dynamic function data corresponding to the dynamic function into index information.**

In some possible cases, after the electronic device enables the application, the application may generate a dynamic function. The electronic device may obtain dynamic function data corresponding to the dynamic function based on page information. Then, the electronic device may record the dynamic function data into the index information.

Description is provided by using an example in which a "settings" application is enabled, a dynamic function is generated based on a Bluetooth setting item of the "settings" application, and the dynamic function data corresponding to the dynamic function is recorded into the index information.

As shown in FIG. 4A(1) and FIG. 4A(2), a user interface 41 is a setting interface corresponding to the Bluetooth setting item in the "settings" application. In response to an operation on a Bluetooth function enabling control 411, the electronic device may enable the Bluetooth function, and display a user interface 42. The user interface 42 shows a Bluetooth-based communication connection that is established between the electronic device and another device after the Bluetooth function is enabled. A name of the another device is "my phone". Herein, that the electronic device establishes a Bluetooth-based communication connection to another device (for example, a device named "my phone") may be considered as a dynamic function of the electronic device. Dynamic function data corresponding to the dynamic function may include fields such as a "title" field (indicating content of the dynamic function), a "description" field (indicating a function, an applicable scope, and the like of the dynamic function), and an "icon" field (indicating an icon address of the dynamic function).

For a related description of the dynamic function data, still refer to the foregoing related description of the static function data. However, a field describing one dynamic function may be different from a field describing one static function. Manners of generating an index based on a field value corresponding to each field, recording the index into the index information, and creating a document may be the same.

The electronic device may record, based on the index template, the dynamic function data corresponding to the dynamic function in the user interface 41 into the index information. For the obtained index information, refer to FIG. 4B below. For the used index template, refer to the foregoing index template shown in FIG. 3C.

As shown in FIG. 4B, a vertical domain corresponding to the dynamic function data that corresponds to the dynamic function generated by the "settings" application is a "settings" vertical domain (a vertical domain B). An example in which the "title" field in the dynamic function data is the name ("my phone") of the another device and the "description" field is "Bluetooth" (indicating a Bluetooth connection) is used for illustrative display. For the "title" field, the electronic device may record, in a unified manner, a field value and an extended value that correspond to the "title" field in the dynamic function data into an index information fragment corresponding to the "'settings' application" vertical domain.

In some possible cases, the electronic device may further generate a document (including a document 11) corresponding to a dynamic function in FIG. 4A(1) and FIG. 4A(2), and one dynamic function corresponds to one document. In some possible cases, the document corresponding to one dynamic function records a field and a field value that describe the dynamic function in the dynamic function data. The document corresponding to one dynamic function may be associated with the field value describing the dynamic function and an extended value of the field value.

**FIG. 5A****-****FIG. 5D** **are schematic diagrams in which an electronic device generates service data based on an application and records the service data into index information.**

In some possible cases, the electronic device may generate service data in a process of using the application. Then, the service data is recorded into the index information.

The following describes the process by using an example in which the electronic device generates the service data of a note based on the "note" application.

As shown in FIG. 5A, a user interface 51 is an example note management page in the "note" application. The user interface 51 shows that the electronic device generates a note (denoted as a note 1) based on the "note" application. The note 1 may be considered as one piece of service data generated by the "note" application. Fields describing the note 1 may include fields such as a "title" field (indicating a title of the note), a "description" field (indicating a body text of the note), and a "time" field (indicating a creation time of the note). A field value corresponding to the "title" field may be "work summary of last year", a field value corresponding to the "description" field may be "work situation XX ... of last year", and a field value corresponding to the "time" field may be "2022/12/30 8:00".

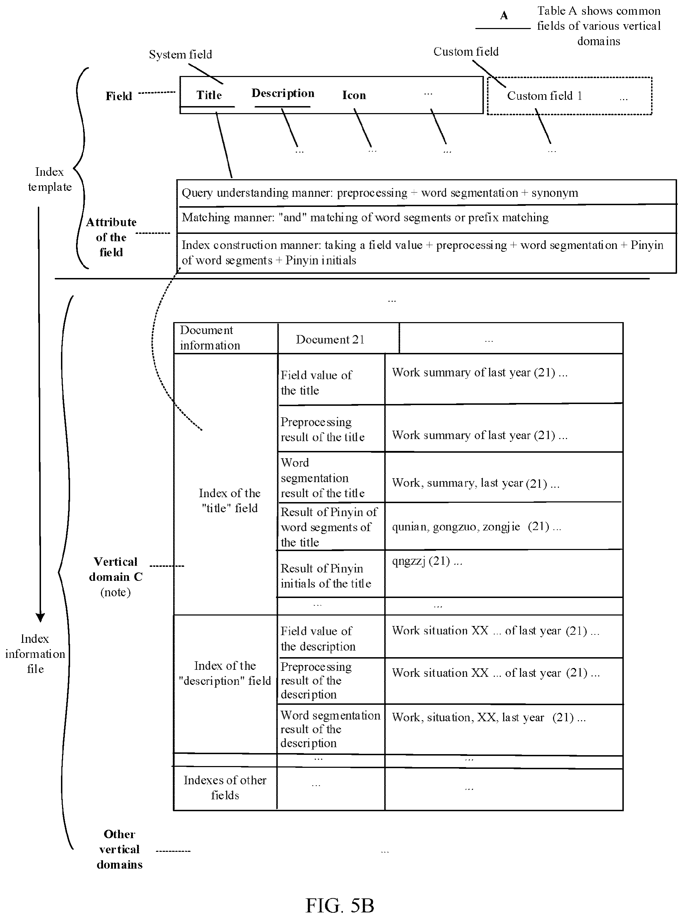

The electronic device may record, based on the index template, the note 1 generated by the "note" application into the index information. For the obtained index information, refer to FIG. 5B below.

In FIG. 5B, an example in which the electronic device generates an index for a field value corresponding to a "title" field of the note 1 based on the index template, and records the index into the index information is used for description. For a process of recording a field value corresponding to another field into the index information, refer to the description of FIG. 5B. Details are not described herein again.

As shown in FIG. 5B, the index template records each field and an attribute corresponding to the field. For a related description of the index template, refer to a related description of the index template in FIG. 3C. Details are not described herein again.

As shown in FIG. 5B, the electronic device may record, in a unified manner, a field value and an extended value that correspond to the "title" field in the note 1 to a location corresponding to the index of the "title" field. Herein, an example in which a vertical domain corresponding to the note is a "note" vertical domain (a vertical domain C) is used for illustrative display. The field value and the extended value that correspond to the "title" field are obtained based on the index template.

In some possible cases, the electronic device may further generate a document (a document 21) corresponding to the note 1, and one note corresponds to one document. The document 21 records each field and a field value that describe the note 1 in the note 1. The document 21 may be associated with the field value describing the note 1 and an extended value of the field value.

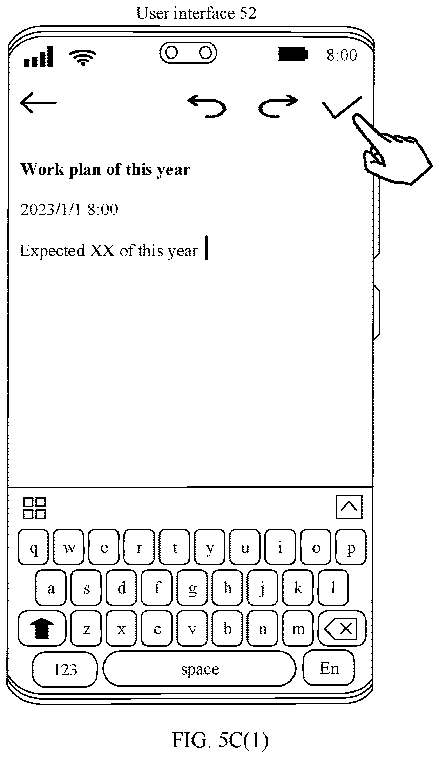

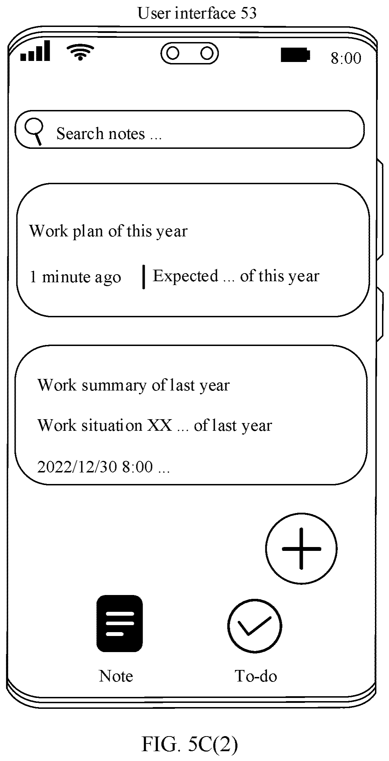

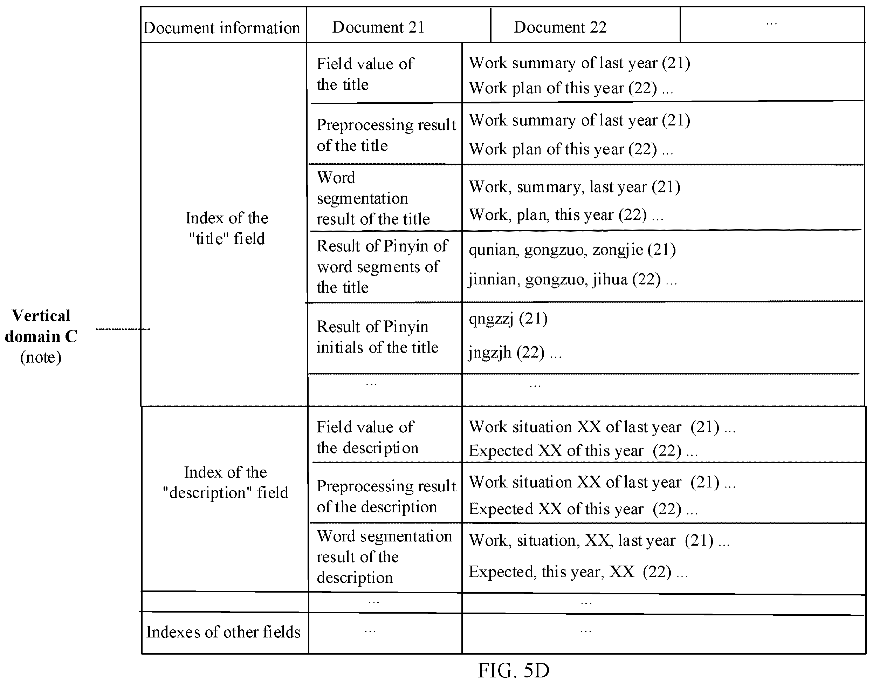

Subsequently, the electronic device may further record, into the index information fragment corresponding to the "note" vertical domain, another note created by using the "note" application. For the process, refer to the following descriptions of FIG. 5C(1) and FIG. 5C(2) and FIG. 5D.

As shown in FIG. 5C(1) and FIG. 5C(2), a user interface 52 and a user interface 53 are example user interfaces involved when the electronic device creates a new note by using the "note" application. The user interface 52 shows that the electronic device generates another note (denoted as a note 2) based on the "note" application. The note 2 may be considered as one piece of service data generated by the "note" application. Fields describing the note 2 may include fields such as a "title" field (indicating a title of the note), a "description" field (indicating a body text of the note), and a "time" field (indicating a creation time of the note). A field value corresponding to the "title" field may be "work plan of this year", a field value corresponding to the "description" field may be "expected XX of this year", and a field value corresponding to the "time" field may be "2023/1/1 8:00".

The electronic device may record, based on the index template, the note 2 generated by the "note" application into the index information. For the obtained index information, refer to FIG. 5D below.

In FIG. 5D, an example in which the electronic device generates an index for a field value corresponding to a "title" field of the note 2 based on the index template, and records the index into the index information is used for description. For a process of recording a field value corresponding to another field of the note 2 into the index information, refer to the description of FIG. 5D. Details are not described herein again.

As shown in FIG. 5D, the index template records each field and an attribute corresponding to the field. For a related description of the index template, refer to a related description of the index template in FIG. 3C. Details are not described herein again.

As shown in FIG. 5D, the electronic device may record, in a unified manner, a field value and an extended value that correspond to the "title" field in the note 2 to a location corresponding to the index of the "title" field. Herein, an example in which a vertical domain corresponding to the note is a "note" vertical domain (a vertical domain C) is used for illustrative display. The field value and the extended value that correspond to the "title" field are obtained based on the index template.

In some possible cases, the electronic device may further generate a document (a document 22) corresponding to the note 2, and one note corresponds to one document. The document 22 records each field and a field value that describe the note 2 in the note 2. The document 22 may be associated with the field value describing the note 2 and an extended value of the field value.

It should be understood herein that indexes in index information corresponding to different vertical domains may come from a same application. For example, the index information fragment corresponding to the "application function" vertical domain may include an index corresponding to each piece of function data provided by the "note" application for the electronic device. The index information fragment corresponding to the "note" vertical domain may include an index corresponding to the note generated by the "note" application.

It should be further understood that the index information corresponding to different vertical domains may include a same field (a common field). For example, with reference to FIG. 3C and FIG. 5B, it can be learned that the "application function" vertical domain and the "note" vertical domain may include common fields such as a "title" field and a "description" field.

**The electronic device may implement a local search function based on the foregoing index information.**

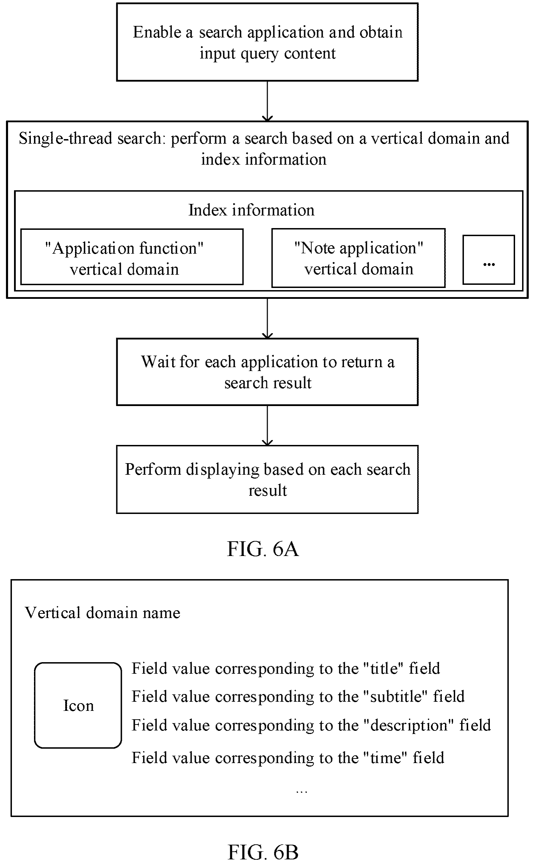

**FIG. 6A and FIG. 6B** **are schematic diagrams in which an electronic device implements a local search function based on index information.**

As shown in FIG. 6A, the electronic device enables a search application to obtain input query content. Then, the electronic device performs a search based on the index information. A search process is completed by searching the index information based on the query content, and is a single-thread search. During searching, the electronic device may further perform a search based on the index information based on the vertical domain, so as to simultaneously search a plurality of vertical domains to obtain a search result. The search result may cover application content that matches the query content in each vertical domain. For example, the electronic device may search the index information fragment corresponding to the "application function" vertical domain based on the query content, to obtain content that matches the query content in the "application function" vertical domain. In addition, the electronic device may further search the index information fragment corresponding to the "note" vertical domain based on the query content, to obtain content that matches the query content in the "note" vertical domain.

In some possible cases, when the search result is a document, and when the electronic device determines a successfully matched field value and extended value by performing matching between the query content and the index in the index information fragment corresponding to each vertical domain, the electronic device may return a document (a matched document) associated with the successfully matched field value and extended value. Then, various matched documents are aggregated based on a vertical domain, and documents recorded in index information fragments corresponding to a same vertical domain are aggregated into one group, to obtain a matched document (a search result) corresponding to each vertical domain. Correlation analysis is performed on the matched document corresponding to each vertical domain, to determine a matched document (a search result) that corresponds to each vertical domain and whose correlation meets a requirement.

Subsequently, the search result that corresponds to each vertical domain and whose correlation meets a requirement is displayed. As shown in FIG. 6B, during displaying, field values corresponding to some or all fields in various search results that correspond to the same vertical domain and whose correlation meets a requirement may be displayed in one display box. The display box may further include a vertical domain name. Generally, a sequential relationship instead of an up-down relationship is presented when a field value (an icon) corresponding to an "icon" field in one search result and a field value corresponding to another field in the search result are displayed in the display box. In this way, an application, a service, or the like from which the field value corresponding to the another field may be highlighted based on an icon.

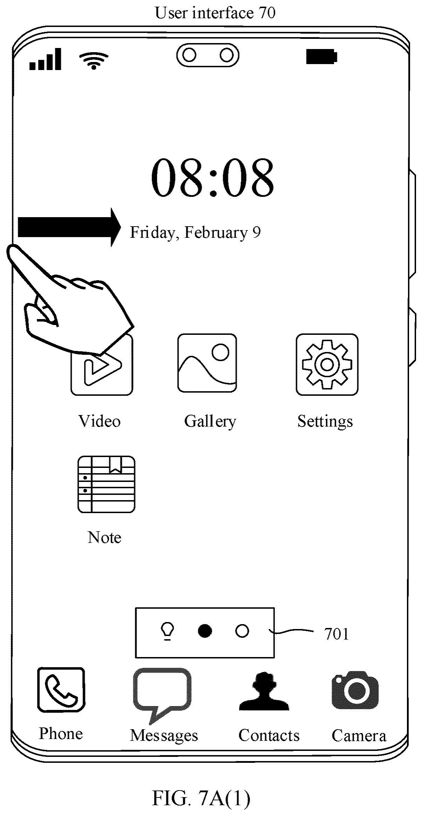

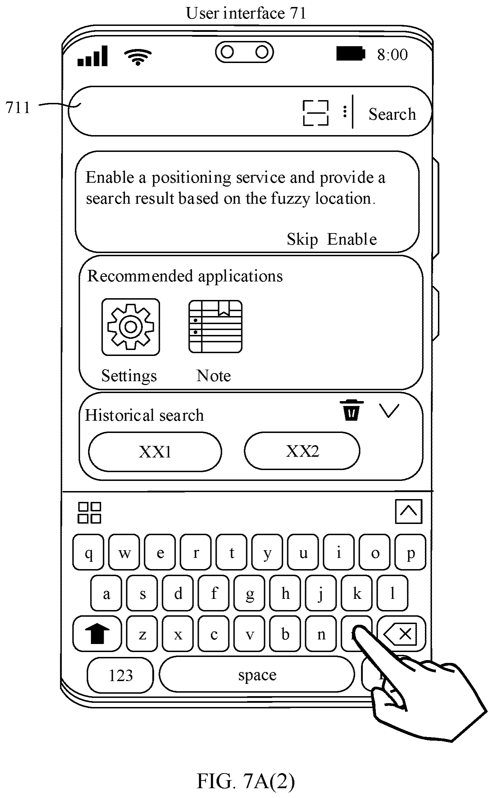

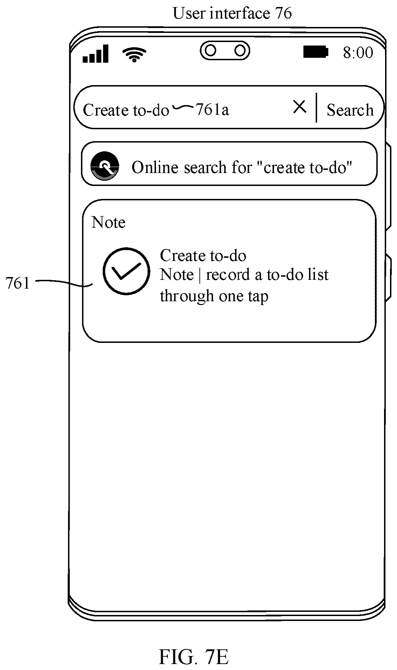

**FIG. 7A(1)-FIG. 7E** **show example user interfaces in which an electronic device displays a search result based on a vertical domain.**

FIG. 7A(1) and FIG. 7A(2) are example diagrams involved when an electronic device enables a local search function provided by a search application. As shown in FIG. 7A(1), a user interface 70 is a home screen of the electronic device. The user interface 70 includes a page indicator 701. The page indicator 701 includes at least one circle icon and one icon in another shape. Each circle icon correspondingly indicates one home screen. The another icon may indicate a leftmost home screen page. When the electronic device displays the user interface 70, a circle icon (a circle icon 1) closest to the icon in another shape in the page indicator 701 is selected to prompt that the currently displayed user interface 70 is the first home screen.

In response to an operation on the user interface 70, for example, a sliding operation with a sliding direction pointing from the icon in another shape to the circle icon 1, the electronic device enables the local search function provided by the search application.

As shown in FIG. 7A(2), a user interface 71 is an example interface that is of the electronic device and that includes the local search function. The user interface 71 includes a search box 711. The search box 711 further displays prompt information to prompt a user that query content may be input in the search box 711. For example, the prompt information may be "Search apps and services".

The electronic device may receive, based on the search box 711, the query content input by the user, and then perform a search based on the query content.

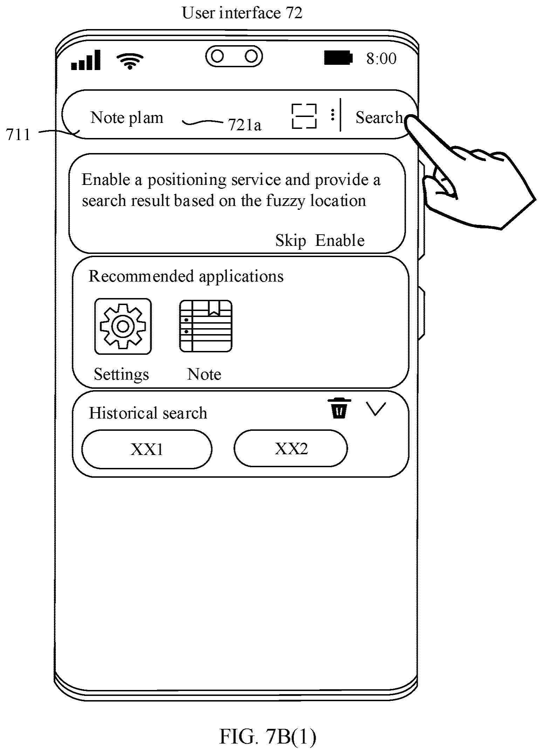

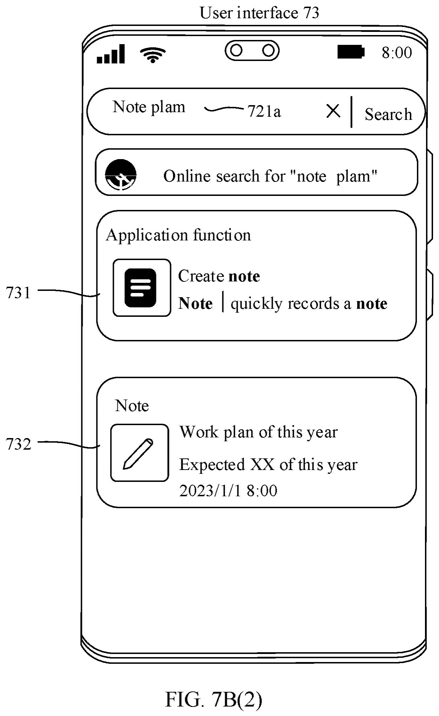

As shown in FIG. 7B(1), a search box 711 displayed in a user interface 72 includes input query content 721a: "note plam". In response to an operation on a search control, the electronic device may search the index information based on the query content 721a to obtain a search result of the query content 721a ("note plam").

By reviewing FIG. 5A and FIG. 5C(1) and FIG. 5C(2), and related descriptions of FIG. 5A and FIG. 5C(1) and FIG. 5C(2), it can be learned that the search result of the query content 721a ("note plam") may include a document corresponding to the "create note" function in the "application function" vertical domain, and a document corresponding to the note "work plan of this year" in the "note" application.

As shown in FIG. 7B(2), a user interface 73 is an example user interface involved when a search result is displayed based on a vertical domain. A display box 731 may include field values corresponding to some fields of each matched document in the "application function" vertical domain, for example, field values corresponding to some fields of the document corresponding to the "create note" function. A display box 732 may include field values corresponding to some fields of each matched document in the "note" vertical domain, for example, field values corresponding to some fields of the document corresponding to the note "work plan of this year".

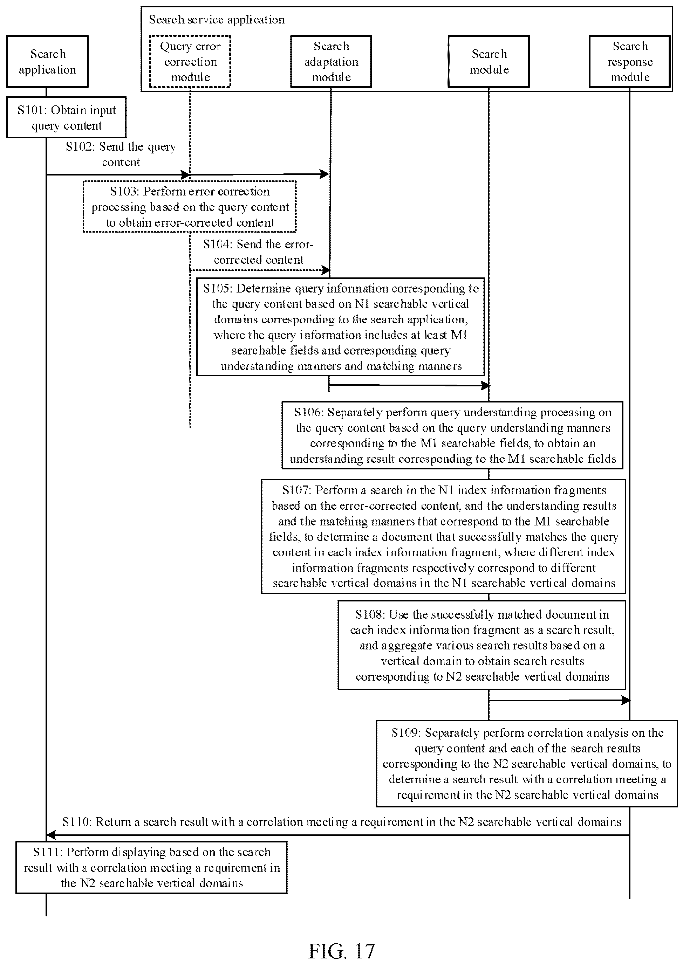

For detailed content of implementing, by the electronic device, the local search function based on the foregoing index information, refer to the following descriptions of step S101-step S111 in FIG. 17. Details are not described herein again.

In some possible cases, the index information records service data, dynamic function data, and static function data of each application. In this case, the index information may be searched for the service data, the dynamic function data, and the static function data of each application based on the query content when the application is in a disabled state.

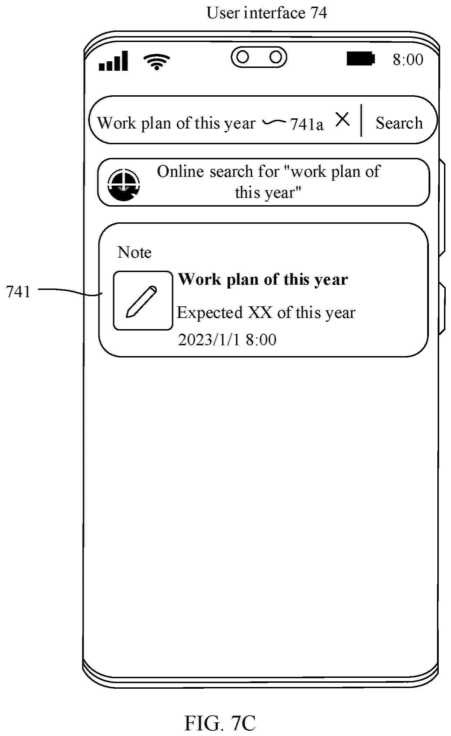

**FIG. 7C** **shows an example user interface involved when an electronic device searches for service data of an application.**

For example, the electronic device does not enable the "note" application, but may still search the index information for a note in the "note" application.

As shown in FIG. 7C, a user interface 74 is an example user interface for searching index information based on the query content 741a ("work plan of this year") to obtain a search result, and displaying the search result. The user interface 74 may include a display box 741, and the display box 741 includes field values corresponding to some fields of a matched document in a "note" vertical domain. For example, the matched document may be a document corresponding to the note "work plan of this year".

For related content of creating a document and an index that correspond to each note in the "note" application, refer to the foregoing descriptions of FIG. 5A-FIG. 5D. Details are not described herein again.

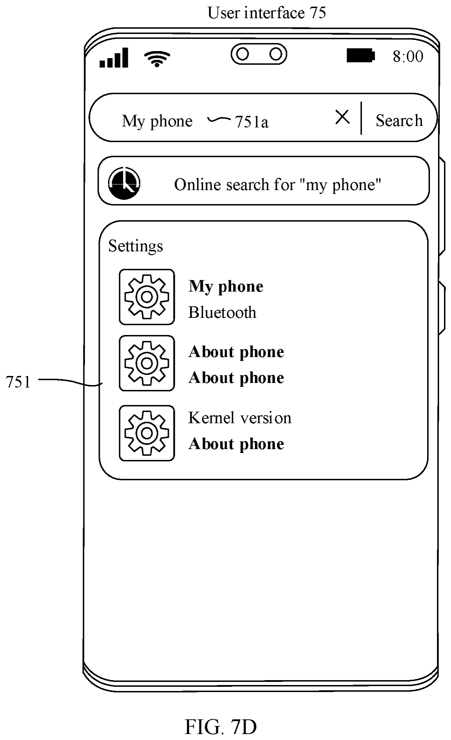

**FIG. 7D** **shows an example user interface involved when an electronic device searches for a dynamic function of an application.**

For example, the electronic device does not enable the "settings" application, but may still search the index information for a dynamic function in the "settings" application.

As shown in FIG. 7D, a user interface 75 is an example user interface for searching index information based on the query content 751a ("my phone") to obtain a search result, and displaying the search result. The user interface 75 may include a display box 751, and the display box 751 includes field values corresponding to some fields of each matched document in a "settings" vertical domain. For example, the matched document may include a document corresponding to a dynamic function of establishing a Bluetooth-based communication connection between an electronic device and another device (for example, named "my phone").

For related content of creating a document and an index that correspond to each dynamic function in the "settings" application, refer to the foregoing descriptions of FIG. 4A(1)-FIG. 4B. Details are not described herein again.

**FIG. 7E** **shows an example user interface involved when an electronic device searches for a static function of an application.**

For example, the electronic device does not enable the "note" application, but may still search the index information for a static function in the "note" application.

As shown in FIG. 7E, a user interface 76 is an example user interface for searching index information based on the query content 761a ("new to-do") to obtain a search result, and displaying the search result. The user interface 76 may include a display box 761, and the display box 761 includes field values corresponding to some fields of a matched document in a "note" vertical domain, or content is determined based on a field value. For example, the matched document may be a document corresponding to a static function "create to-do", and the electronic device may display content such as a name, a description, and an icon of the "create to-do" function based on the document corresponding to the "create to-do" function. The icon of the "create to-do" function is determined based on an icon address (a field value of the "icon" field) corresponding to the "create to-do" function in the document corresponding to the "create to-do" function. The electronic device may find an icon corresponding to the "create to-do" function based on the icon address corresponding to the "create to-do" function, and display the icon. Herein, the icon corresponding to the "create to-do" function may be an icon of the "create to-do" function. In some possible cases, the icon corresponding to the "create to-do" function may alternatively be an icon of an application in which the "create to-do" function is located.

For related content of creating a document and an index that correspond to each static function in the "note" application, refer to the foregoing descriptions of FIG. 3D(1)-FIG. 3F. Details are not described herein again.

In some possible cases, the electronic device may integrate, into a search service application, the foregoing method for constructing an index based on an index template, and instructions involved in performing a search by using index information. Another application may invoke the search service application to construct and store an index, and perform a search by using the index information.

The electronic device may obtain static searchable content and dynamic searchable content from the application in different manners, and then generate corresponding indexes for the static searchable content and the dynamic searchable content by using the search service application, and record the indexes into the index information.

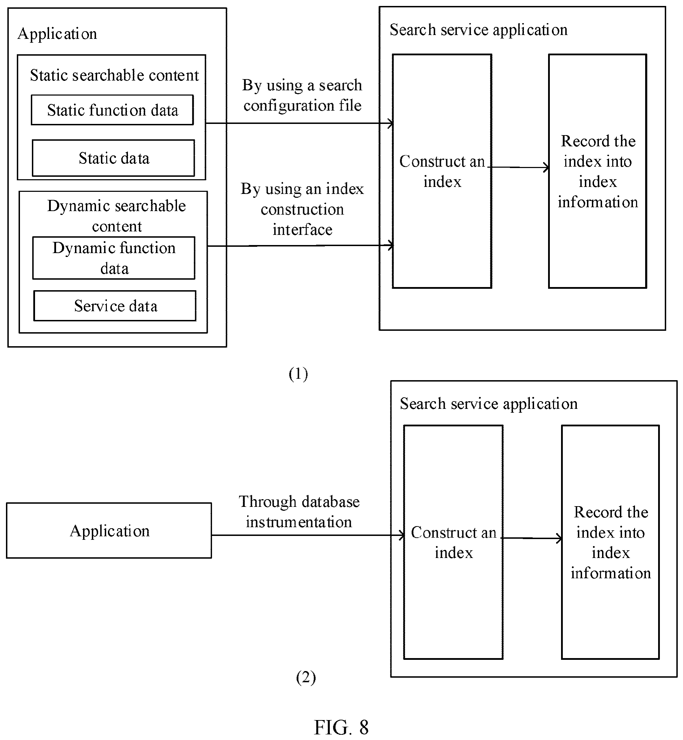

**FIG. 8** **shows an example manner in which an electronic device generates an index based on static searchable content and dynamic searchable content.**

The static searchable content of the application should be an attribute of the application. After the electronic device downloads and installs the application, if a version number of the application does not change, the static searchable content does not change. Therefore, as shown in (1) in FIG. 8, in a process of installing the application, the static searchable content (for example, static function data and static data) of the application may be obtained by using a search configuration file, and then an index is constructed based on the static searchable content, and the index is recorded into the index information.

A process of obtaining the static searchable content of the application by using a search configuration file is described in detail below by using an example in which the static searchable content is static function data.

In a development process of the application, the static function data may be written into the search configuration file of the application as extended field information. The search configuration file is a file in an xml format provided by the application. Before the extended field information is written into the search configuration file, search configuration information required when the application supports searching in a system is defined in the search configuration file. For example, search configuration information indicating that the application can be found through searching is configured in the search configuration file, so that when an application name is input in a search box provided by a local search service, the application may be returned (for example, an icon of the application or a name of the application is returned to indicate the application). In some possible cases, the search configuration information indicating that the application can be found through searching includes setting the android:includeInGlobalSearch item to true. In an installation process of the application, after obtaining the search configuration file, the electronic device further obtains the search configuration information in the search configuration file, so that the application can be found through searching by using a local search service.

After the extended field information is written into the search configuration file, and the configuration file information (including the extended field information) is obtained from the installation package of the application, the electronic device may further read the extended field information in the search configuration file, and record the field information into the search information corresponding to the application. Subsequently, after the installation is completed, the electronic device may send a broadcast indicating completion of application installation, to trigger the electronic device to obtain the field information in the search information. Because the field information represents static function data, up to now, it may be considered that the electronic device obtains the static function data from the installation package of the application.

Then, the electronic device creates an index corresponding to the static function data based on the field information and by using the search service application, and records the index into the index information. For example, the electronic device may record the index corresponding to the static function data into an index information fragment corresponding to an "application function" vertical domain.

In some possible cases, the document corresponding to the static function data may be further created when the index corresponding to the static function data is created. The index and the document may be recorded into the index information. For example, the electronic device may record the index and the document that correspond to the static function data into the index information fragment corresponding to the "application function" vertical domain.

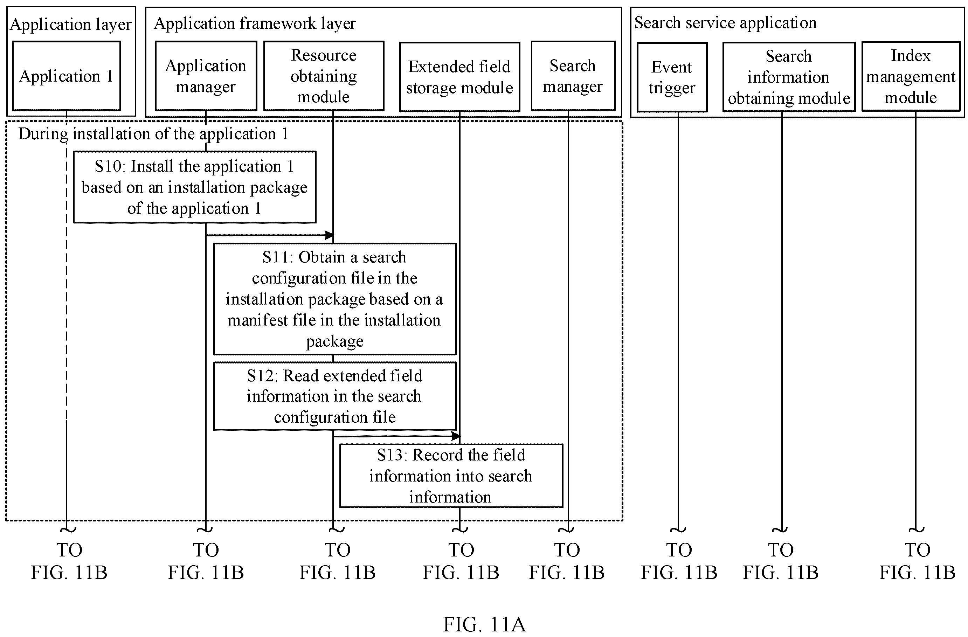

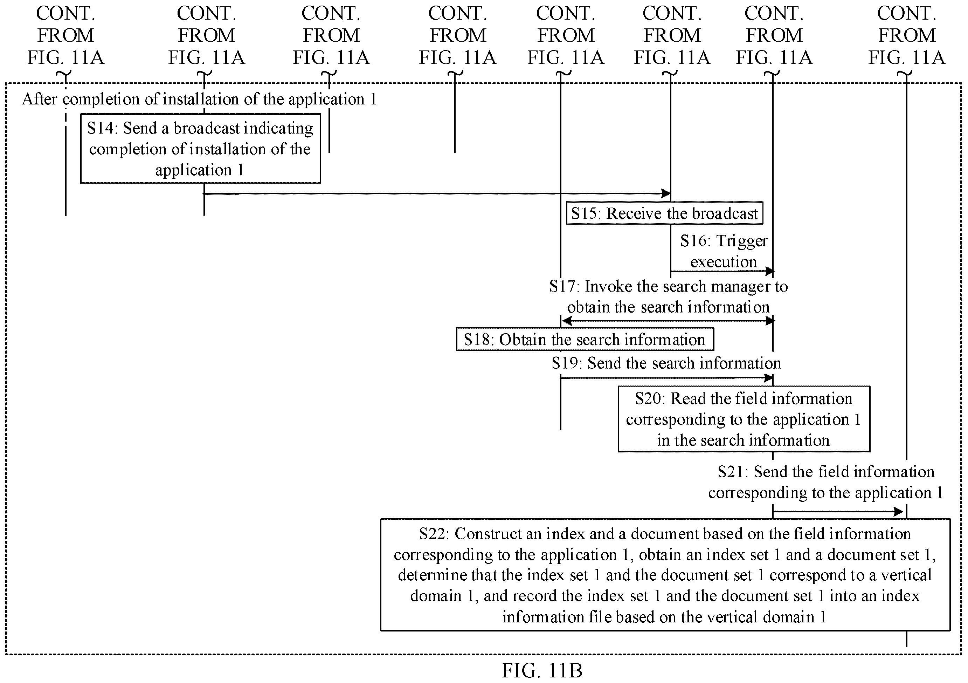

For a detailed process of creating an index and a document by using a search configuration file, still refer to the descriptions of step S10-step S22 in FIG. 11A and FIG. 11B. Details are not described herein again.

The dynamic searchable content of the application is generated in the application after the electronic device enables the application. The application is in an enabled state when the dynamic searchable content is generated. Therefore, as shown in (1) in FIG. 8, an index construction interface may be configured in the application, so that the application transmits, by using the configured interface, each field and each field value in the dynamic searchable content (for example, dynamic function data or service data) to the search service application. In this way, the search service application can create an index corresponding to the dynamic searchable content, and record the index into the index information. For example, when the dynamic searchable content is dynamic function data, the electronic device may record the index corresponding to the dynamic function data into the index information fragment corresponding to the "application function" vertical domain.

In some possible cases, the document corresponding to the dynamic function data may be further created when the index corresponding to the dynamic function data is created. The index and the document may be recorded into the index information. For example, when the dynamic searchable content is dynamic function data, the electronic device may record the index and the document that correspond to the dynamic function data into the index information fragment corresponding to the "application function" vertical domain.

In some possible cases, a field recorded in an initial index template is a system field, and the index template further records an attribute corresponding to the system field. However, in addition to the system field, the dynamic searchable content generated by the application may further include another field (a custom field). The custom field does not have a corresponding attribute in the index template. Therefore, the application needs to define an attribute for the custom field. The function of defining an attribute for the custom field may be implemented by configuring a field definition interface in the application.

In some possible cases, the custom field may also be referred to as a new field.

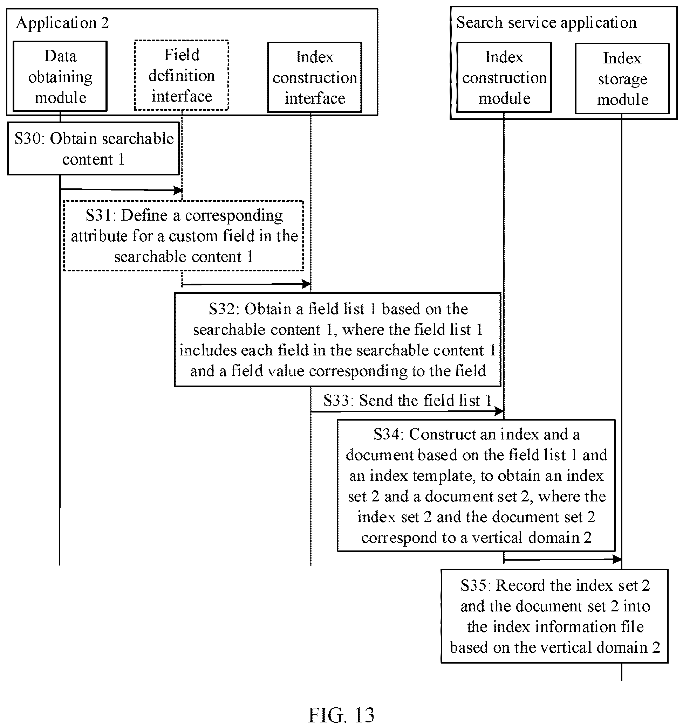

For a detailed process of creating an index and a document by using a configured interface, still refer to the descriptions of step S30-step S35 in FIG. 13. Details are not described herein again.

In some possible cases, for an application for which no index construction interface is configured, the electronic device may further provide another manner for obtaining the dynamic searchable content of the application, so as to transmit the dynamic searchable content to the search service application. As shown in (2) in FIG. 8, the electronic device provides a database instrumentation manner for obtaining the dynamic searchable content of the application. Then, the electronic device transmits the dynamic searchable content to the search service application, to create an index corresponding to the dynamic searchable content, and record the index into the index information.

The database is a database corresponding to the application. After generating the dynamic searchable content by using the application, the electronic device writes the dynamic searchable content into the database corresponding to the application. The database instrumentation manner may be used to detect that the database is changed, and determine a location in the database into which the dynamic searchable content is written. The location in the database into which the dynamic searchable content is written may be used by the electronic device to obtain the dynamic searchable content from the database based on the location.

For example, the electronic device may set a database instrumentation manner for a "messages" application. When a new SMS message is created in the "messages" application and the new SMS message is recorded into a database corresponding to the "messages" application, the electronic device may detect that the database corresponding to the "messages" application is changed, and determine a location in the database into which the new SMS message is written. The electronic device may obtain the new SMS message from the database corresponding to the "messages" application based on the location. Then, the electronic device transmits the new SMS message to the search service application, to create an index corresponding to the new SMS message, and record the index into the index information.

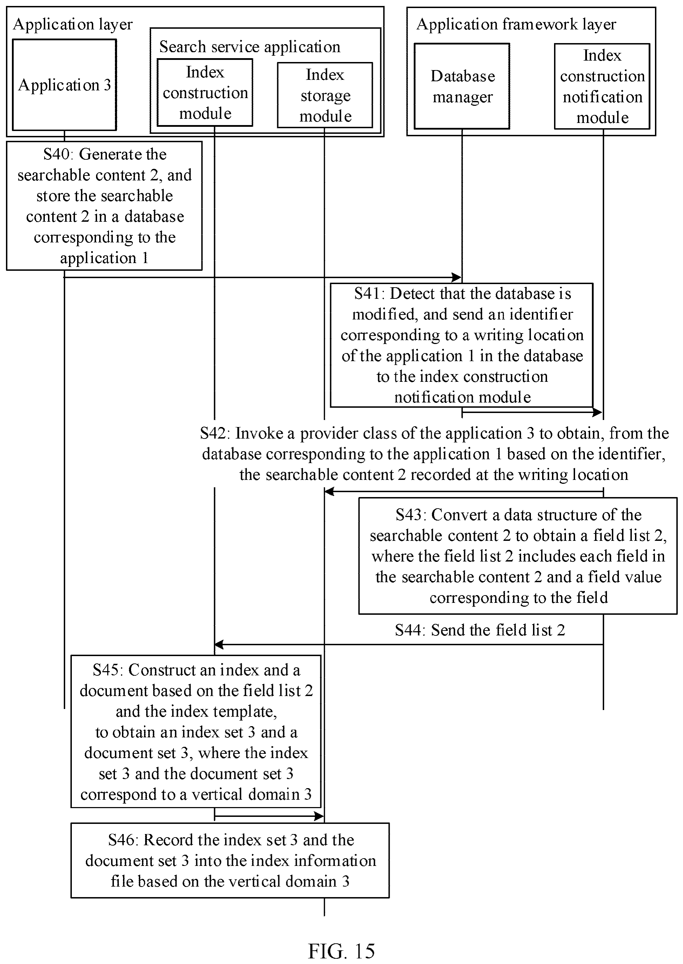

For a detailed process of creating an index and a document through database instrumentation, still refer to the descriptions of step S40-step S46 in FIG. 15. Details are not described herein again.

**The following describes an example software structure framework involved in generating index information and performing a search based on the index information.**

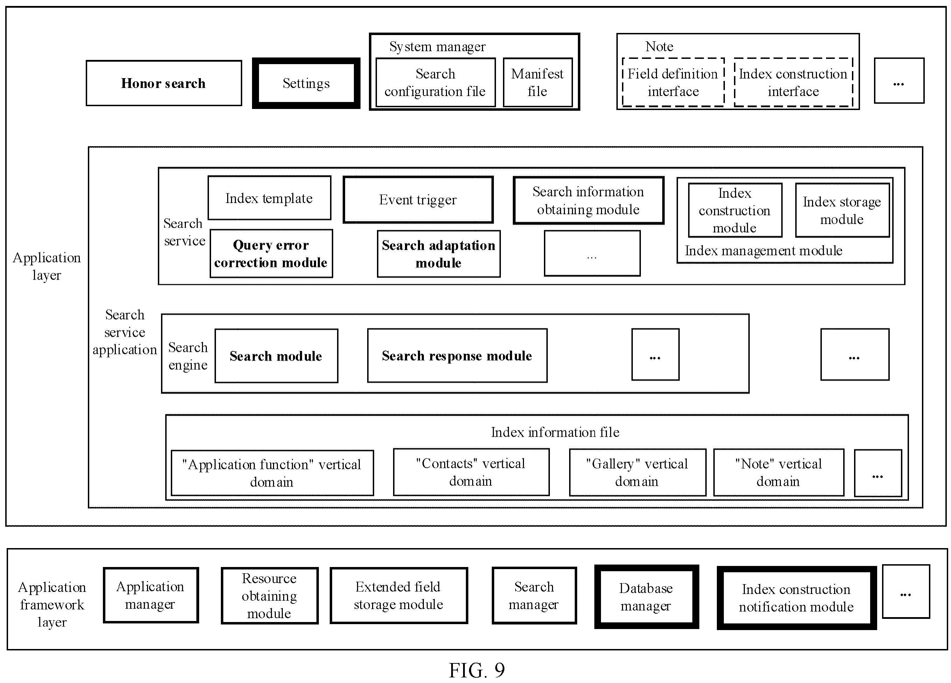

**FIG. 9** **shows an example software structure framework involved in generating index information and performing a search based on the index information.**

As shown in FIG. 9, the layered architecture divides software into several layers, and each layer has a clear role and task. Layers communicate with each other through a software interface. In some embodiments, a system is divided into four layers: an application layer, an application framework layer, a runtime (Runtime) and system library (not shown), and a kernel layer (not shown) from top to bottom.

The application layer may include a series of application packages.

As shown in FIG. 9, the application packages may include application programs (which may also be referred to as applications) such as an "honor search" application, a "settings" application, a "system manager" application, and a "note" application.

The "honor search" application may be used to provide a local search function. The "honor search" application may be used to receive query content input by a user, and invoke a search service application based on the query content to complete searching.

It should be understood that another application that may implement intra-application searching may also invoke the "search service" application to implement searching.

Some applications at the application layer may include a search configuration file and a manifest file, or an index construction interface. The application that includes the index construction interface may further include a field customization interface. For example, the "system manager" application may include a search configuration file and a manifest file. The "note" application may include a field customization interface and an index construction interface.

The manifest file in the application may be used to declare information (a file name, a file path, and the like) of a file included in the application. Another file in the application may be read based on the manifest file. For example, the manifest file may record information such as a name and a path of the search configuration file, and another module may obtain the search configuration file by using the manifest file.

The search configuration information indicating that the application can be found through searching is configured in the search configuration file in the application.

The search configuration file may be further used to record extended field information (representing static searchable content of the application) in the application when an index is created by using the search configuration file. For related content of the extended field information and the search configuration file, refer to the foregoing content description. Details are not described herein again.

The index construction interface may be configured to: when an index is created by using a configured interface, support the application in transmitting each field and each field value in the dynamic searchable content (for example, dynamic function data or service data) to the search service application.

The field definition interface may be configured to: when an index is created by using the configured interface, execute the application to define an attribute for a custom field of the dynamic searchable content.

In some possible cases, the field definition interface may be further configured to record the attribute corresponding to each custom field into the index template.

**The application package may further include a search service application.**

The search service application may include a functional module and data involved in constructing and recording an index, and performing a search by using index information.

The data used to construct and record an index may include an index template and an index information file. The index template may be used to generate an index, and the index information file may be used to store index information. In some possible cases, the index information in the index information file may be divided based on a vertical domain to obtain an index information fragment corresponding to each vertical domain. For example, the vertical domain may include one or more of vertical domains such as an "application function" vertical domain, a "contacts" vertical domain, a "gallery" vertical domain, and a "note" vertical domain. This is not limited in this embodiment of this application. For detailed descriptions of the index template and the index information, refer to the foregoing description of the index template. Details are not described herein again.

Functional modules used to construct and record an index may include an event trigger, a search information obtaining module, an index management module, an index management module, and the like.

The event trigger may be configured to: when an index is created by using a search configuration file, receive a broadcast indicating completion of application installation, and trigger, after receiving the broadcast indicating completion of application installation, the search information obtaining module to make execution.

The search information obtaining module may be configured to: when an index is created by using a search configuration file, obtain search information (which records extended field information in the application) corresponding to the installed application, and then send the search information to the index management module.

In some possible cases, the index management module may include an index construction module and an index storage module.

The index construction module may be configured to: obtain a field and a field value from a file that includes a field and a field value, and create an index corresponding to the field value based on the index template.

The index construction module may invoke the following index storage module to store the index.

The index storage module may be configured to record the index into the index information.

**The application layer may include an application manager, a resource obtaining module, an extended field storage module, a search manager, a database manager, and an index construction notification module.**

The application management module may be configured to manage installation, uninstallation, and the like of the application.

The application management module may further invoke the resource obtaining module to obtain a resource of the application in a process of installing the application, for example, obtain a resource such as a search configuration file of the application.

The resource obtaining module may be configured to: in the process of installing the application, obtain the search configuration file of the application, and read an extended field in the search configuration file.

The extended field storage module may be configured to be invoked by the resource obtaining module to record the extended field information into the search information.

The search manager may be configured to be invoked by the search information obtaining module to obtain the search information, and then send the search information to the search information obtaining module.

The database manager may be configured to monitor, when an index is created through database instrumentation, whether a database corresponding to the application is modified. When detecting that dynamic searchable content is written into the database, the database manager sends an identifier of a writing location of the application in the database to the index construction notification module. Each row of data in the database has one unique identifier, and the identifier of the writing location is an identifier that a writing row has.

The index construction notification module may be configured to: after receiving the identifier of the writing location of the application in the database, obtain the dynamic searchable content from the database corresponding to the application based on the identifier. Then, the index construction notification module obtains a field and a field value in the searchable content to obtain a field list, and sends the field list to the index construction module for creating an index.

As shown in FIG. 9, herein, the index template and the index information have different functions and different use scenarios, which is described by using an example in which the index template and the index information are separately stored in a search service application. A purpose of the index template is to define a rule for generating the index information, and a purpose of the index information is to record an index, so as to facilitate searching. Separate storage facilitates the management and use of the index template and the index information.

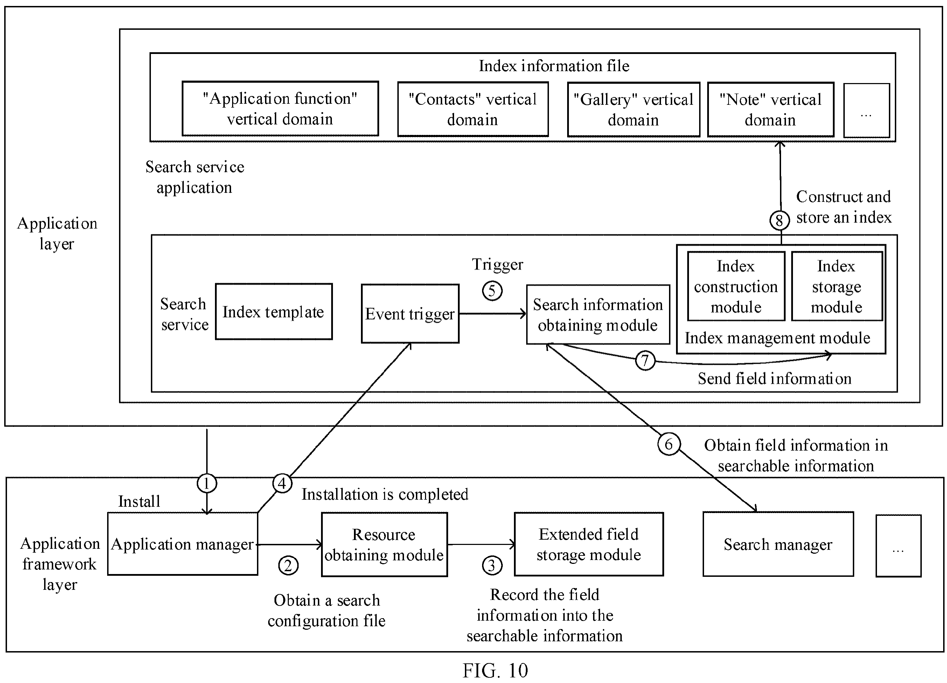

**FIG. 10** **shows an example software structure framework and processing procedure for creating and recording an index by using a search configuration file.**

For a process in which the electronic device creates an index corresponding to the static searchable content by using a search configuration file, and records the index, refer to the descriptions of step 1-step 8 in FIG. 10.

In step 1 in FIG. 10, after the electronic device downloads an application 1, the application manager may be responsible for installing the application 1. Step 1 in FIG. 10 is a circle identifier ① in FIG. 10.

In step 2 in FIG. 10, in a process of installing an application, the application manager notifies the resource obtaining module to obtain a search configuration file in an installation package of the application 1. Step 2 in FIG. 10 is a circle identifier ② in FIG. 10.

In step 3 in FIG. 10, the resource manager obtains extended field information in the search configuration file (of the application 1) and records the field information into searchable information. Step 3 in FIG. 10 is a circle identifier ③ in FIG. 10.

In step 4 in FIG. 10, after the installation of the application 1 is completed, the application manager sends a broadcast indicating completion of installation of the application 1. Step 4 in FIG. 10 is a circle identifier ④ in FIG. 10.

In step 5 in FIG. 10, after accepting the broadcast indicating completion of installation, the event trigger triggers the search information obtaining module to make execution. Step 5 in FIG. 10 is a circle identifier ⑤ in FIG. 10.

In step 6 in FIG. 10, after being triggered to make execution, the search information obtaining module invokes the search manager to obtain search information, and reads field information corresponding to the application 1 in the search information. Step 6 in FIG. 10 is a circle identifier ⑥ in FIG. 10.

In step 7 in FIG. 10, the search information obtaining module sends the field information corresponding to the application 1 to the index management module. Step 7 in FIG. 10 is a circle identifier ⑦ in FIG. 10.

In step 8 in FIG. 10, the index management module obtains the field information corresponding to the application 1 in the searchable information, and constructs and stores an index based on the field information, where the index includes an index corresponding to static function data in the application 1. Step 8 in FIG. 10 is a circle identifier ⑧ in FIG. 10.

It should be understood herein that in step 8 in FIG. 10, in some possible cases, in addition to creating the index corresponding to the static function data, the index management module may further create a document corresponding to the static function data. The index and the document may be recorded into the index information.

**With reference to the foregoing software structural block diagrams in** **FIG. 9** **and** **FIG. 10****, the following describes in detail an interaction procedure between internal modules when the electronic device creates and records an index and a document by using a search configuration file.**

**FIG. 11A** **and** **FIG. 11B** **show an example interaction procedure between internal modules when an index and a document are created and recorded by using a search configuration file.**

For a process in which the electronic device creates an index corresponding to the static searchable content by using a search configuration file, and records the index, refer to the descriptions of step S10-step S22 in FIG. 11A and FIG. 11B.

S10: An application manager installs an application 1 based on an installation package of the application 1.

The application 1 is an application that writes static searchable content into a search configuration file of the application 1 as extended field information in a development process. For example, the application 1 is a "contacts" application, a "messages" application, a "video" application, or a "settings" application. This is not limited in this embodiment of this application.

It should be understood that the static searchable content may include static function data, other static data, and the like. This is not limited in this embodiment of this application. For descriptions of content such as the search configuration file and the static function data, refer to the foregoing related content. Details are not described herein again.

An example in which the static searchable content of the application 1 is the static function data of the application 1 is used below for description. The static function data of the application 1 may include a field describing each static function in the application 1 and a field value corresponding to each field. Fields and field values describing different static functions in the application 1 may be recorded as one group of data into the extended field information.

S11: The application manager invokes a resource obtaining module to obtain the search configuration file in the installation package based on a manifest file in the installation package.

The manifest file in step S11 is a manifest file corresponding to the application 1.

The search configuration file defines the search configuration information required when the application 1 supports searching in a system. The search configuration file may further include field information describing a static function in the application 1.

The manifest file corresponding to the application 1 may be used to declare information (a file name, a file path, and the like) of a file included in the application 1. Another file in the application may be read based on the manifest file. For example, the manifest file may record information such as a name and a path of the search configuration file.

The resource obtaining module may determine the path of the search configuration file by using the manifest file corresponding to the application 1. Then, the resource obtaining module obtains the search configuration file corresponding to the application 1 from the installation package of the application 1 based on the path of the search configuration file.

S12: The resource obtaining module reads the extended field information in the search configuration file.

The field information shown in step S12 is field information of the application 1. For example, when the application 1 is the "video" application, for field information (representing static function data) recorded in the search configuration file of the application 1, reference may be made to the foregoing descriptions of FIG. 3B(1) and FIG. 3B(2).

In some possible cases, the expanded field information in the search configuration file includes a field and a field value of each static function. The resource obtaining module is configured with a capability of reading field information, and therefore may find the field information of the application 1 from the search configuration file of the application 1, and read the field information of the application 1.

S13: The resource obtaining module records the field information into search information.

The field information involved in step S13 is the field information of the application 1.

The search information may be used to record field information of each application in the electronic device. Different field information corresponds to one application.

The resource obtaining module records the field information into the search information, and the field information corresponds to the application 1. For example, the resource obtaining module may ensure that a unique identifier of the application 1 corresponds to the field information of the application 1.

It should be understood herein that the foregoing step S10-step S13 are performed in an installation process of the application 1. In some possible cases, the resource obtaining module may invoke a searchableinfo class to perform step S11-step S13. When performing step S13, the resource obtaining module may record the field information of the application 1 into search information of the searchableinfo class. The search information may include at least one object used to record application data. For example, the search information may include an msearchableinfo() object, and the field information of the application 1 may be recorded into the msearchableinfo() object.

After the installation of the application 1 is completed, the following step S14-step S22 may be performed.

S14: An application manager sends a broadcast indicating completion of installation of the application 1.

The broadcast indicating completion of installation of the application 1 carries an identifier of the application 1.

S15: An event trigger receives the broadcast.

After receiving the broadcast indicating completion of installation, the event trigger may perform the following step S16 to trigger a search information obtaining module to make execution.

S16: The event trigger triggers the search information obtaining module to make execution.

The event trigger sends a notification indicating completion of installation of the application 1 to the search information obtaining module, to trigger the search information obtaining module to make execution. The notification carries the identifier of the application 1, so that the search information obtaining module determines that the installed application is the application 1.

S17: The search information obtaining module invokes the search manager to obtain the search information.

After the search information obtaining module is triggered to make execution, the search information obtaining module may invoke the search manager to obtain the search information.

S18: The search manager obtains the search information.

The search manager is located at an application framework layer, and the search manager is configured to manage and obtain search information in the electronic device.

S19: The search manager sends the search information to the search information obtaining module.

After obtaining the search information, the search manager may send the search information to the search information obtaining module in a search service application.

S20: The search information obtaining module reads the field information corresponding to the application 1 in the search information.

The search information obtaining module reads the field information corresponding to the application 1 from the search information based on the identifier corresponding to the application 1.

S21: The search information obtaining module sends the field information corresponding to the application 1 to the index management module.

S22: The index management module constructs an index and a document based on the field information corresponding to the application 1, obtains an index set 1 and a document set 1, determines that the index set 1 and the document set 1 correspond to a vertical domain 1, and records the index set 1 and the document set 1 into an index information file based on the vertical domain 1.

When the field information corresponding to the application 1 is field information of the "video" application shown in FIG. 3B(1) and FIG. 3B(2), for the index set 1 and the document set 1 that are obtained by the index management module based on the field information corresponding to the application 1, reference may be made to FIG. 3C.

The index construction module in the index management module may construct the index and the document based on the field information corresponding to the application 1, obtain the index set 1 and the document set 1, and determine that the index set 1 and the document set 1 correspond to the vertical domain 1. For such a process, refer to the following content. The vertical domain 1 herein may be represented as a name of an index information sub-file that records an index constructed based on static function data.

An example in which the field information corresponding to the application 1 includes a field and a field value that describe each static function (of the application 1) is used herein for description.

The index set 1 includes indexes corresponding to various static functions (of the application 1). An index corresponding to one static function includes an index corresponding to each field value that describes the static function in the field information (corresponding to the application 1). An index corresponding to one field value includes the field value itself and an extended value of the field value.

The document set 1 includes all documents corresponding to each static function. One document corresponds to one static function. The static function corresponding to one document is the static function described by each field and each field value in the document.

The index construction module separately generates an index corresponding to each static function based on the index template and based on the field and the field value that correspond to each static function in the field information (corresponding to the application 1), and separately generates a document based on the field and the field value that correspond to each static function, to obtain the document corresponding to each static function. Fields and field values corresponding to one static function are various fields and field values that describe one static function.

The index construction module may associate the index corresponding to one static function with the document corresponding to the static function. An association manner may include: setting a same identifier for the document corresponding to the static function, each field value in the index corresponding to the static function, and an extended value of the field value, so that the electronic device can find a document of the same identifier by using the identifier of the field value or the extended value.

For example, the field information includes a field and a field value that correspond to a static function 1. That the index construction module generates an index and a document that correspond to the static function 1 includes: separately generating an index corresponding to each field value based on the index template and based on each field and each field value that correspond to the static function 1, to obtain an index corresponding to the static function 1. In addition, a document corresponding to the static function 1 is generated based on each field and each field value that describe the static function 1. The document corresponding to the static function 1 includes each field and each field value that describe the static function 1, and the document corresponding to the static function 1 is associated with an index corresponding to each field value that describes the static function 1.

The field value corresponding to the static function 1 includes a field value 1. That the index construction module generates an index corresponding to the field value 1 based on the index template includes: obtaining an index construction manner (denoted as an index construction manner 1) of a field corresponding to the field value 1 from the index template, and generating an index corresponding to the field value 1 in the index construction manner 1 based on the field value 1. The index corresponding to the field value 1 includes the field value 1 itself and an extended value of the field value 1.

For content of the index template and the index construction manner corresponding to the field, refer to the foregoing description of related content. Details are not described herein again.

It should be understood that a type of a field in one document is unique. For example, one document includes only one "title" field and one "description" field.

The index management module records a vertical domain corresponding to different types of searchable content. When determining that the searchable content of the to-be-created index is the field information, the index management module may determine that the index set 1 and the document set 1 correspond to the vertical domain 1. For example, the vertical domain 1 may be an "application function" vertical domain.

The index storage module in the index management module may record the index set 1 and the document set 1 into the index information file based on the vertical domain 1. For such a process, refer to the following content.

The index storage module may record the index set 1 and the document set 1 into an index information fragment corresponding to the vertical domain 1 in the index information file. In some possible cases, when the vertical domain 1 is the name of the index information sub-file (the static function sub-file) that records the index constructed based on the static function data, the index storage module finds the static function sub-file based on a file path 1, and records the index set 1 and the document set 1 into the static function sub-file. The file path 1 includes the name of the static function sub-file. The static function sub-file may be considered as an index information fragment corresponding to the vertical domain 1. The file path 1 may be considered as a path corresponding to the static function sub-file. The file path 1 may be used to find the static function sub-file.

In some possible cases, in step S22, the operation of recording the index set 1 and the document set 1 into the index information file based on the vertical domain 1 is optional. The index information file may not be divided into index information based on the vertical domain. The index storage module records the index set 1 and the document set 1 into the index information file.

It should be noted herein that a field in the search configuration file of the application 1 and a field value corresponding to the field describe searchable content that the application 1 has after the installation and before the first start. For example, the foregoing description may be a function that the application 1 has after the installation and before the first start. A function described by a field in the search configuration file may be referred to as a static function.

It should be understood herein that, in step S22, creating an index while further creating a document is intended for description. Step S22 is optional. In a searching process, when a field value or an extended value that successfully matches the query content is determined, and when a document associated with the field value or the extended value is recalled, step S22 may be performed.

In some other possible cases, when a field value or an extended value that successfully matches the query content is determined, and when other content (for example, a field value) is recalled, step S22 may not be performed. The following step is performed.

The index management module constructs an index based on the field information corresponding to the application 1, obtains an index set 1, determines that the index set 1 corresponds to a vertical domain 1, and records the index set 1 into an index information file based on the vertical domain 1. For descriptions of constructing the index set 1 and recording the index set 1 into the index information file, refer to the foregoing description of the related content in step S22. Details are not described herein again.

It should be further understood that step S14-step S22 are performed after installation of the application is completed. In an actual application, step S14 may not be performed, and instead, a broadcast indicating start of installation of the application 1 is sent. In this way, step S15-step S20 may be performed in an installation process of the application 1.

Herein, the index and the document that correspond to the application 1 are recorded into the index information file only after installation of the application 1 is completed. A purpose of doing so is to avoid the following case: When installation of the application 1 is suspended and the application 1 is deleted after start of installation and before completion of installation, the index and the document that correspond to the application 1 are recorded into the index information file, but the application 1 is not installed in the electronic device, thereby causing a problem that a function of the application 1 can be searched for but cannot be executed.

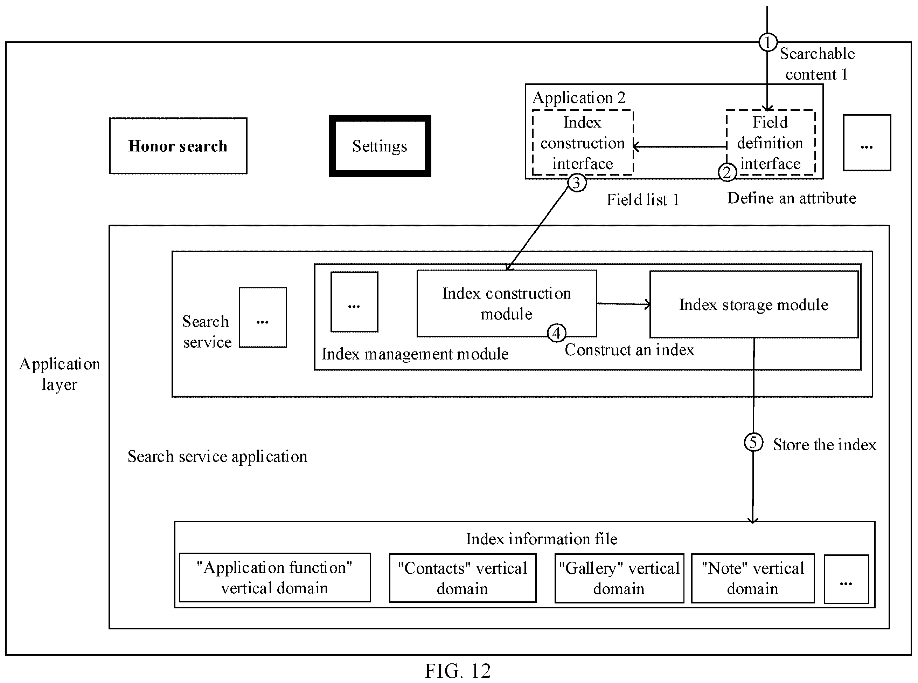

**FIG. 12** **shows an example software structure framework and processing procedure for creating and recording an index by using a configured interface.**

For a process in which the electronic device creates an index corresponding to the dynamic searchable content by using a configured interface, and records the index, refer to the descriptions of step 1-step 5 in FIG. 12.

In step 1 in FIG. 12, searchable content 1 is generated in an application 2. Step 1 in FIG. 12 is a circle identifier ① in FIG. 12.

In step 2 in FIG. 12, an attribute is defined for a custom field in the searchable content 1 by using a field definition interface. Step 2 in FIG. 12 is a circle identifier ② in FIG. 12.

In step 3 in FIG. 12, the index construction interface generates a field list 1 based on each field in the searchable content 1 and a field value corresponding to the field. Step 3 in FIG. 12 is a circle identifier ③ in FIG. 12.

In step 4 in FIG. 12, the index construction module constructs an index (an index corresponding to the searchable content 1) based on the field list 1. Step 4 in FIG. 12 is a circle identifier ④ in FIG. 12.

In step 5 in FIG. 12, the index storage module stores the constructed index and records the index into the index information file. Step 5 in FIG. 12 is a circle identifier ⑤ in FIG. 12.

It should be understood herein that in step 4 in FIG. 12, in some possible cases, in addition to creating an index corresponding to the searchable content 1, the index construction module may further create a document corresponding to the searchable content 1. The index and the document may be recorded into the index information.

**With reference to the foregoing software structural block diagrams in** **FIG. 9** **and** **FIG. 12****, the following describes in detail an interaction procedure between internal modules when the electronic device creates and records an index and a document by using a configured interface.**

**FIG. 13** **shows an example interaction procedure between internal modules when an index and a document are created and recorded by using a configured interface.**

For a process in which the electronic device creates an index corresponding to the dynamic searchable content by using a configured interface, and records the index, refer to the descriptions of step S30-step S35 in FIG. 13.

S30: A data obtaining module of an application 2 obtains searchable content 1. The searchable content 1 is dynamic searchable content generated in a process of enabling the application 2. For example, the searchable content 1 may be service data generated based on the application 2, or may be dynamic function data generated based on the application 2.

In response to an input operation in the application 2, the data obtaining module of the application 2 may obtain the searchable content 1 based on the input content. The input operation may be an operation of creating new content. For example, when the application 2 is the foregoing "note" application, in response to an operation of creating a new note by a user, a data obtaining module of the "note" application may obtain the searchable content 1 based on the new note, where the searchable content 1 may include a field value in the new note and a field corresponding to the field value.

S31: A field definition interface of the application 2 defines a corresponding attribute for a custom field in the searchable content 1.

Step S31 is optional.

In some possible cases, the field definition interface may define a corresponding attribute for each custom field. For example, a matching manner and an index construction manner that correspond to each custom field are defined. A query understanding manner corresponding to each custom field may be further defined.

In some possible cases, the field definition interface includes an IndexForm class. The field definition interface may invoke the IndexForm class to define a corresponding attribute for each custom field.

The field definition interface may further record each custom field and the attribute corresponding to the custom field into the index template.

In some possible implementations, each custom field may be determined by using a unique identifier corresponding to the custom field. This may ensure that two identical custom fields do not appear in the index template. A unique identifier corresponding to one custom field may be used to indicate the custom field. Generally, the unique identifier corresponding to the custom field may further include an identifier of the application 2.

In some possible cases, step S31 may not be performed. A custom field may not be recorded into the field list 1.

It should be understood herein that an attribute corresponding to a custom field defined by the application 2 includes but is not limited to one or more of an index construction manner, a matching manner, and a query understanding manner that correspond to the custom field.

In some possible cases, when the field value corresponding to the custom field in the content generated by the application 2 is recorded into the index information file, a custom field may be added to the index information file, and an index corresponding to the custom field may be added to the index information file. Before a new field is added to the index information file, the application 2 may add, to the index template, an index construction manner corresponding to the custom field specified by the application 2. An index corresponding to the custom field added to the index information file is an index constructed based on a field value corresponding to the custom field.

In some possible cases, the application 2 may specify an index construction manner and a matching manner of the custom field, and add the index construction manner and the matching manner that correspond to the custom field to the index template. The matching manner corresponding to the custom field is used to specify a manner of performing matching between an index value corresponding to the custom field and the query content. When the query understanding manner is not set for the custom field, and when matching is performed between the index value corresponding to the custom field and the query content, query understanding may not be performed on the query content. A query result is obtained by performing matching between the query content and the index value corresponding to the custom field.

In some other possible cases, the application 2 may specify an index construction manner, a matching manner, and a query understanding manner of the custom field, and add the index construction manner, the matching manner, and the query understanding manner that correspond to the custom field to the index template. The query understanding manner corresponding to the custom field is used to specify a manner of performing query understanding on the query content to obtain an understanding result. The matching manner corresponding to the custom field is used to specify a manner of performing matching between the index value corresponding to the custom field and the understanding result.

S32: The index construction interface of the application 2 obtains a field list 1 based on the searchable content 1, where the field list 1 includes each field in the searchable content 1 and a field value corresponding to the field.

The field list 1 is a field list corresponding to the application 2.

The index construction interface may convert a data format of each field in the searchable content 1 and a field value corresponding to the field to obtain the field list 1. A data structure of the field list 1 is a data structure that can be parsed by the index construction module.

S33: The index construction interface of the application 2 sends the field list 1 to the index construction module of the search service application.

S34: The index construction module constructs an index and a document based on the field list 1 and the index template, to obtain an index set 2 and a document set 2, where the index set 2 and the document set 2 correspond to a vertical domain 2.

The index construction module may determine, based on the fact that the field list 1 is the field list corresponding to the application 2, that the vertical domain 2 is the vertical domain corresponding to the application 2, and the vertical domain corresponding to the application 2 may be represented as the name of the index information sub-file corresponding to the application 2.

When the searchable content 1 is dynamic function data, for the index set 2 and the document set 2 that are obtained by the index management module based on the field list 1, refer to FIG. 4B.

When the searchable content 1 is a new note, for the index set 2 and the document set 2 that are obtained by the index management module based on the field list 1, refer to FIG. 5D.

The index construction module may construct an index and a document based on the field list 1, to obtain an index set 2 and a document set 2, and determine that the index set 2 and the document set 2 correspond to a vertical domain 2. For such a process, refer to the following content.

The index set 2 includes indexes corresponding to various field values in the field list 1. An index corresponding to one field value includes the field value itself and an extended value of the field value.

The document set 2 includes all documents corresponding to the searchable content 1. When the searchable content 1 is dynamic function data, one document corresponds to one dynamic function. The dynamic function corresponding to one document is a dynamic function described by each field and each field value in the document. When the searchable content 1 is service data, one piece of searchable content corresponds to one document. In this case, the document may include each field in the field list 1 and a field value corresponding to the field.

The index construction module may separately associate each document in the document set 2 with an index corresponding to each field value in each document. A manner of associating one document in the document set 2 with the index corresponding to each field value in the document may include: setting a same identifier for the document, each field value in the document, and the extended value of the field value, so that the electronic device can find a document of the same identifier by using the identifier of the field value or the extended value.

For content of the index construction manner corresponding to the field and the index template, refer to the foregoing description of related content. Details are not described herein again.

S35: The index construction module notifies the index storage module to record the index set 2 and the document set 2 into the index information file based on the vertical domain 2.

The index storage module may record the index set 2 and the document set 2 into the index information file based on the vertical domain 2. For such a process, refer to the following content.

The index storage module may record the index set 2 and the document set 2 into an index information fragment corresponding to the vertical domain 2 in the index information file. The process includes: When the vertical domain 2 is the name of the index information sub-file corresponding to the application 2, the index storage module finds the index information sub-file corresponding to the application 2 based on a file path 2, and records the index set 2 and the document set 2 into the index information sub-file corresponding to the application 2. The file path 2 includes the name of the index information sub-file corresponding to the application 2. Herein, the index information sub-file corresponding to the application 2 may be considered as an index information fragment corresponding to the vertical domain 2. The file path 2 may be considered as a path corresponding to the index information sub-file corresponding to the application 2. The file path 2 may be used to find the index information sub-file corresponding to the application 2.

In some possible cases, in step S35, the operation of recording the index set 2 and the document set 2 into the index information file based on the vertical domain 2 is optional. The index information file may not be divided into index information based on the vertical domain. The index storage module records the index set 2 and the document set 2 into the index information file.

In some possible cases, the index template includes not only an attribute corresponding to a system field, but also an added attribute corresponding to a custom field. Attributes corresponding to custom fields may come from different applications. Herein, for ease of distinguishing different custom fields, the index template may be divided into index sub-templates corresponding to different applications. An index sub-template corresponding to each application may include a system field and an attribute corresponding to the system field. For an application having a custom field, an index sub-template corresponding to the application may further include a custom field customized by the application and an attribute corresponding to the custom field. In this way, in step S31, the application 2 may add the custom field defined by the application 2 and the attribute corresponding to the custom field to the index sub-template corresponding to the application 2 in the index template.

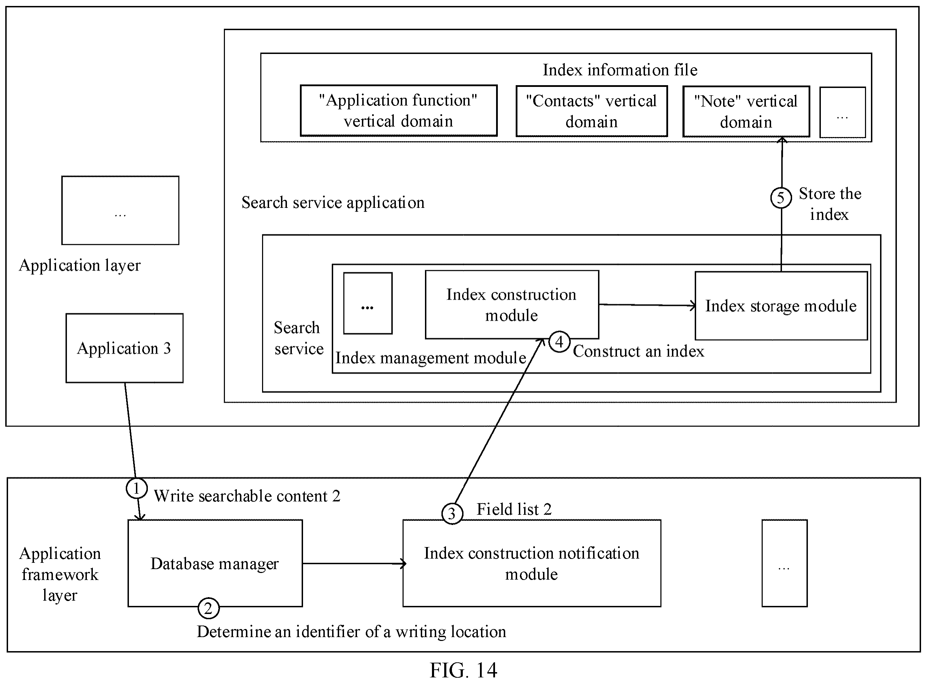

**FIG. 14** **shows an example software structure framework and processing procedure for creating and recording an index through database instrumentation.**

For a process in which the electronic device creates an index corresponding to the dynamic searchable content through database instrumentation, and records the index, refer to the descriptions of step 1-step 5 in FIG. 14.

In step 1 in FIG. 14, an application 3 generates searchable content 2 and writes the searchable content 2 into a database. Step 1 in FIG. 14 is a circle identifier ① in FIG. 14.

In step 2 in FIG. 14, a database manager checks that the database is modified, and determines an identifier of a writing location. Step 2 in FIG. 14 is a circle identifier ② in FIG. 14.

In step 3 in FIG. 14, an index construction notification module obtains the searchable content 2 from the database based on the identifier of the writing location, and generates a field list 2 based on the searchable content 2. Step 3 in FIG. 14 is a circle identifier ③ in FIG. 14.

In step 4 in FIG. 14, the index construction module constructs an index (an index corresponding to the searchable content 2) based on the field list 2. Step 4 in FIG. 14 is a circle identifier ④ in FIG. 14.

In step 5 in FIG. 14, the index storage module stores the constructed index and records the index into the index information file. Step 5 in FIG. 14 is a circle identifier ⑤ in FIG. 14.

It should be understood herein that in step 4 in FIG. 14, in some possible cases, in addition to creating an index corresponding to the searchable content 2, the index construction module may further create a document corresponding to the searchable content 2. The index and the document may be recorded into the index information.

**With reference to the foregoing software structural block diagrams in** **FIG. 9** **and** **FIG. 14****, the following describes in detail an interaction procedure between internal modules when the electronic device creates and records an index and a document through database instrumentation.**

**FIG. 15** **shows an example interaction procedure between internal modules when an index and a document are created and recorded through database instrumentation.**

For a process in which the electronic device creates an index corresponding to the dynamic searchable content through database instrumentation, and records the index, refer to the descriptions of step S40-step S46 in FIG. 15.

S40: The application 3 generates the searchable content 2, and stores the searchable content 2 in the database corresponding to the application 1.

In response to an input operation in the application 3, the application 3 may obtain the searchable content 2 based on the input content. The input operation may be an operation of creating new content. For example, when the application 3 is the foregoing "messages" application, in response to an operation of creating a new SMS message by a user, the "messages" application may obtain the searchable content 2 based on the new SMS message, where the searchable content 2 may include a field value in the new SMS message and a field corresponding to the field value.

S41: The database manager detects that the database is modified, and sends an identifier corresponding to a writing location of the application 1 in the database to the index construction notification module.

S42: The index construction notification module invokes a provider class of the application 3 to obtain, from the database corresponding to the application 1 based on the identifier, the searchable content 2 recorded at the writing location.

S43: The index construction notification module converts the data structure of the searchable content 2 to obtain a field list 2, where the field list 2 includes each field in the searchable content 2 and a field value corresponding to the field.

Each field in the searchable content 2 included in the field list 2 is a system field in the searchable content 2.

The index construction module determines that a vertical domain 3 is a vertical domain corresponding to the application 3, and the vertical domain corresponding to the application 3 may be represented as a name of an index information sub-file corresponding to the application 3. The index information sub-file corresponding to the application 3 records an index constructed for content (for example, dynamic function data or service data) generated in the application 3.

S44: The index construction notification module sends the field list 2 to the index construction module.

S45: The index construction module constructs an index and a document based on the field list 2 and the index template, to obtain an index set 3 and a document set 3, where the index set 3 and the document set 3 correspond to a vertical domain 3.

The index construction module may construct an index and a document based on the field list 2, to obtain an index set 3 and a document set 3, and determine that the index set 3 and the document set 3 correspond to a vertical domain 3. For such a process, refer to the following content.

The index set 3 includes indexes corresponding to various field values in the field list 2. An index corresponding to one field value includes the field value itself and an extended value of the field value.

The document set 3 includes all documents corresponding to the searchable content 2. When the searchable content 2 is dynamic function data, one document corresponds to one dynamic function. The dynamic function corresponding to one document is a dynamic function described by each field and each field value in the document. When the searchable content 2 is service data, one piece of searchable content corresponds to one document. In this case, the document may include each field in the field list 2 and a field value corresponding to the field.

The index construction module may separately associate each document in the document set 3 with an index corresponding to each field value in each document. A manner of associating one document in the document set 3 with the index corresponding to each field value in the document may include: setting a same identifier for the document, each field value in the document, and the extended value of the field value, so that the electronic device can find a document of the same identifier by using the identifier of the field value or the extended value.

For content of the index construction manner corresponding to the field and the index template, refer to the foregoing description of related content. Details are not described herein again.

S46: The index construction module invokes the index storage module to record the index set 3 and the document set 3 into the index information file based on the vertical domain 3.

The index storage module may record the index set 3 and the document set 3 into the index information file based on the vertical domain 3. For such a process, refer to the following content.

The index storage module may record the index set 3 and the document set 3 into an index information fragment corresponding to the vertical domain 3 in the index information file. The process includes: When the vertical domain 3 is the name of the index information sub-file corresponding to the application 3, the index storage module finds the index information sub-file corresponding to the application 3 based on a file path 3, and records the index set 3 and the document set 3 into the index information sub-file corresponding to the application 3. The file path 3 includes the name of the index information sub-file corresponding to the application 3. Herein, the index information sub-file corresponding to the application 3 may be considered as an index information fragment corresponding to the vertical domain 3. The file path 3 may be considered as a path corresponding to the index information sub-file corresponding to the application 3. The file path 3 may be used to find the index information sub-file corresponding to the application 3.

In some possible cases, in step S46, the operation of recording the index set 3 and the document set 3 into the index information file based on the vertical domain 3 is optional. The index information file may not be divided into index information based on the vertical domain. The index storage module records the index set 3 and the document set 3 into the index information file.

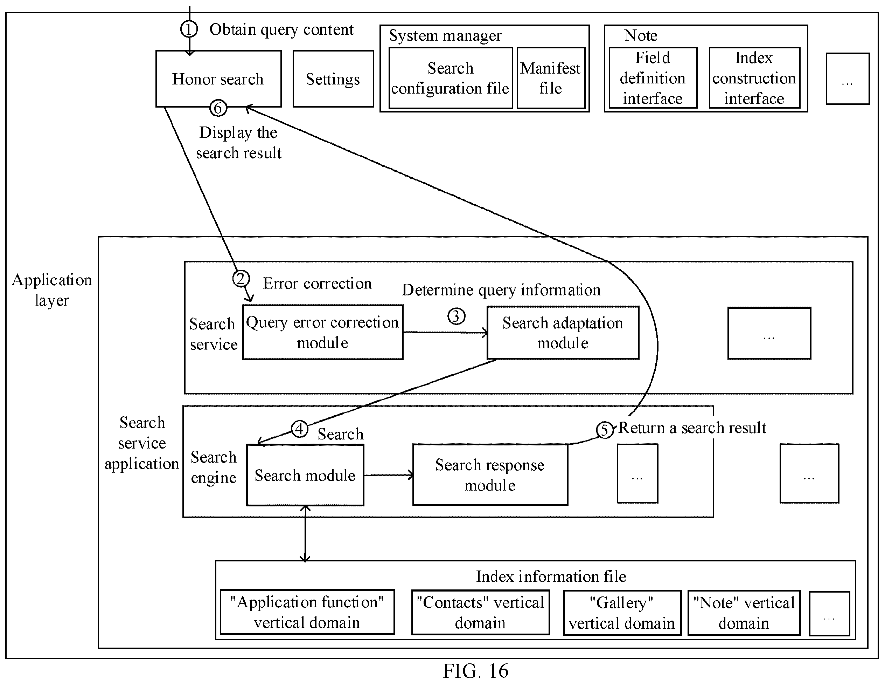

**FIG. 16** **shows an example software structure framework and processing procedure for implementing searching by using index information.**

For a process in which the electronic device implements searching by using the index information, refer to the descriptions of step 1-step 6 in FIG. 16.

In step 1 in FIG. 16, a search application (for example, an "Honor search" application) obtains query content. Step 1 in FIG. 16 is a circle identifier ① in FIG. 16.

In step 2 in FIG. 16, a query error correction module performs error correction on the query content. Step 2 in FIG. 16 is a circle identifier ② in FIG. 16.

In step 3 in FIG. 16, a search adaptation module determines, based on the query content, that query information (query information corresponding to the query content) is searched for in the index information file to determine a search result. Step 3 in FIG. 16 is a circle identifier ③ in FIG. 16.

In step 4 in FIG. 16, a search module performs a search based on the query information corresponding to the query content, to obtain a search result. Step 4 in FIG. 16 is a circle identifier ④ in FIG. 16.

In step 5 in FIG. 16, a search response module returns a search result to a search application (for example, the "Honor search" application). In some possible cases, the search response module returns a search result with a correlation meeting a requirement. Step 5 in FIG. 16 is a circle identifier ⑤ in FIG. 16.

In step 6 in FIG. 16, the search application (for example, the "Honor search" application) displays the search result. Step 6 in FIG. 16 is a circle identifier ⑥ in FIG. 16.

**With reference to the foregoing software structural block diagrams in** **FIG. 9** **and** **FIG. 16****, the following describes in detail an interaction procedure between internal modules when an electronic device implements searching by using index information.**

**FIG. 17** **shows an example interaction procedure between internal modules when searching is implemented by using index information.**

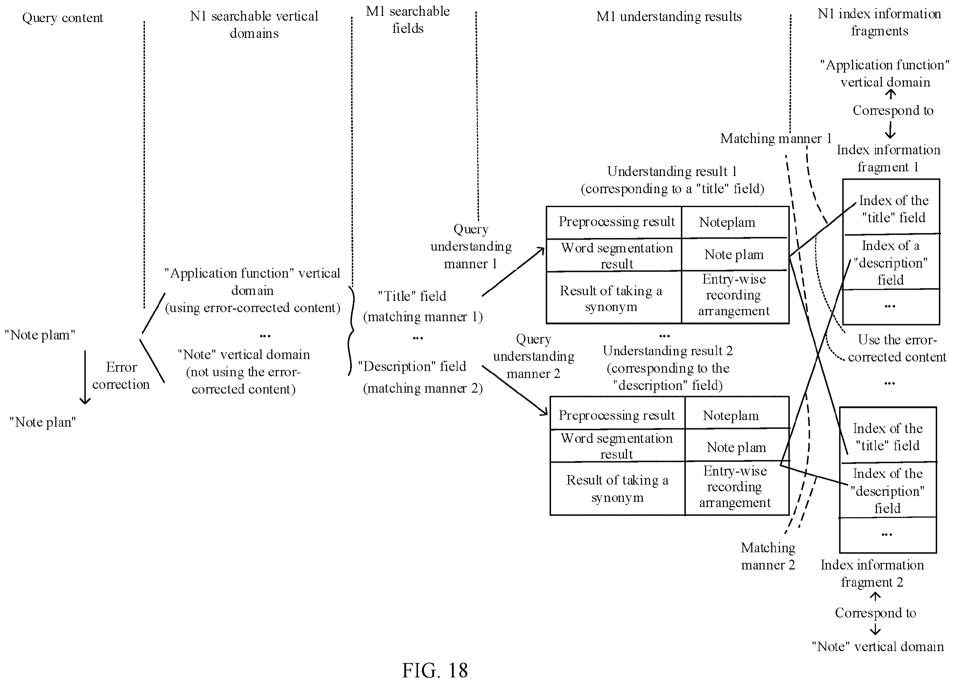

**FIG. 18** **is a schematic diagram of inputting query content for searching.**

For a process in which the electronic device implements searching by using the index information, refer to the descriptions of step S101-step S111 in FIG. 17.

S101: A search application obtains input query content.

The search application may be a global search application or a local search application provided by the electronic device. The global search application is a search application whose corresponding searchable vertical domain is a complete vertical domain. The local search application is a search application whose corresponding searchable vertical domain is a partial vertical domain.

The searchable vertical domain corresponding to the search application includes a vertical domain that needs to be matched for the query content. For example, when the search application is a global search application, the query content may be matched with an index in an index information fragment corresponding to the complete vertical domain. When the searchable vertical domain corresponding to the search application includes an "application function" vertical domain, the query content may be matched with an index in an index information fragment corresponding to a complete "application function" vertical domain.

In some possible cases, the search application may provide a search box, and the search application may receive input query content by using the search box.

The search application may provide a user with a plurality of manners of inputting the query content, including but not limited to voice input, keyboard input, or the like.

In response to an operation of inputting the query content in the search application, the search application may obtain the input query content, and invoke the search service application to perform the search operation. For related content of this process, refer to the following descriptions of step S102-step S110.

S102: The search application sends the query content to a search adaptation module of a search service application.

In some possible cases, the search application may send the query content to the search adaptation module of the search service application, so that the search adaptation module can determine query information corresponding to the query content based on N1 searchable vertical domains corresponding to the search application. For a description of this process, refer to the following description of step S105. Details are not described herein again.

In some possible cases, in addition to sending the query content to the search adaptation module, the search application may further send the query content to the query error correction module of the search service application. In this way, the query error correction module may perform error correction on the query content. For a description of this process, refer to the following description of step S103. Details are not described herein again.

S103: The query error correction module performs error correction processing based on the query content to obtain error-corrected content.

Step S103 is optional.

The query error correction module performs error correction processing on the query content to determine an incorrect character in the query content, and corrects the incorrect character to obtain the error-corrected content. In this way, even if an incorrect character exists in the input query content, such as a character with a spelling error, the electronic device may correct the error.

In some possible cases, before performing error correction on the query content, the query error correction module may further preprocess the query content to obtain preprocessed query content. Then, error correction processing is performed based on the preprocessed query content to obtain the error-corrected content.

A purpose of preprocessing the query content is to obtain query content that is more compliant with the specification herein. Preprocessing the query content includes one or more of performing uppercase and lowercase unification on the query content, converting a double-byte character in the query content into a single-byte character, deleting a space symbol in the query content, and converting a traditional Chinese character in the query content into a simplified Chinese character.

S104: The query error correction module sends the error-corrected content to the search adaptation module.

When step S103 is performed, the query error correction module may perform step S104.

When step S103 is not performed, step S104 is not performed either.

S105: The search adaptation module determines query information corresponding to the query content based on the N1 searchable vertical domains corresponding to the search application, where the query information includes at least M1 searchable fields and corresponding query understanding manners and matching manners.

The N1 searchable vertical domains may be represented as names of N1 index information fragments. When the index information is recorded into the index information file, one index information fragment may be considered as one index information sub-file, and the N1 searchable vertical domains may be represented as names of N1 index information sub-files.

The search adaptation module first finds N1 index information fragments based on file paths corresponding to the N1 index information fragments. File paths corresponding to different index information fragments include names of the index information fragments. When the index information fragment is an index information sub-file, the search adaptation module finds the index information sub-file based on a file path corresponding to each index information sub-file.

When the index information file includes a plurality of index information sub-files, the N1 searchable vertical domains corresponding to the search application actually define index information sub-files accessible by the search application in the index information file. When the search application is a global search application, all index information sub-files in the index information file are accessible by the search application. When the search application is a local search application, some index information sub-files in the index information file are accessible by the search application.

The search adaptation module determines searchable fields in the index information fragments corresponding to the N1 searchable vertical domains based on the N1 searchable vertical domains corresponding to the search application. Herein, a total of M1 searchable fields in the index information fragments corresponding to the N1 searchable vertical domains are used as an example for description. Both N1 and M1 are positive integers greater than or equal to 1.

The searchable field in the index information fragment corresponding to one searchable vertical domain includes a field whose corresponding index is not empty. If an index corresponding to a field is not empty, a field value and an extended value that correspond to the field are recorded into the index information.

The search adaptation module obtains, from the index template, a query understanding manner and a matching manner that correspond to the M1 searchable fields as the query information corresponding to the query content.

In some possible cases, in addition to including query understanding manners and matching manners that correspond to the M1 searchable fields, the query information corresponding to the query content may further include query error correction values corresponding to the N1 searchable vertical domains. One searchable vertical domain corresponds to one query error correction value. The query error correction value corresponding to one searchable vertical domain is used to indicate whether the searchable vertical domain uses the error-corrected content. If one searchable vertical domain uses the error-corrected content, it indicates that when matching is performed in an index information fragment corresponding to the searchable vertical domain based on the query content, the error-corrected content is used to perform matching with an index in the index information fragment.

In some possible implementations, a query error correction value corresponding to one vertical domain may be recorded into the electronic device as an attribute corresponding to the vertical domain.

S106: The search adaptation module notifies the search module to separately perform query understanding processing on the query content based on the query understanding manners corresponding to the M1 searchable fields, to obtain an understanding result corresponding to the M1 searchable fields.

Each of the M1 searchable fields corresponds to one query understanding manner. For the query understanding manner corresponding to the field, refer to the foregoing description of related content. Details are not described herein again.

The search module may separately perform query understanding processing on the query content based on the query understanding manners corresponding to the M1 searchable fields, to obtain an understanding result corresponding to the M1 searchable fields. Subsequently, matching may be performed in indexes corresponding to different fields based on understanding results corresponding to different fields. For a related description of a corresponding matching process, refer to the following description of step S107. Details are not described herein again.

As shown in FIG. 18, step S106 is described herein by using an example in which the query content is "note plam", and M1 searchable fields include a "title" field and a "description" field. A query understanding manner (a query understanding manner 1) corresponding to the "title" field may be "preprocessing + word segmentation + taking a synonym". A query understanding manner (a query understanding manner 2) corresponding to the "description" field may be "preprocessing + word segmentation + taking a synonym". The search module performs query understanding processing on the query content based on the query understanding manner 1 to obtain an understanding result (an understanding result 1) corresponding to the "title" field. The search module performs query understanding processing on the query content based on the query understanding manner 2 to obtain an understanding result (an understanding result 2) corresponding to the "description" field. The understanding result 1 and the understanding result 2 are a preprocessing result (noteplam), a word segmentation result (note plam), and a result of taking a synonym (entry-wise recording arrangement).

S107: The search module performs a search in the N1 index information fragments based on the error-corrected content, and the understanding results and the matching manners that correspond to the M1 searchable fields, to determine a document that successfully matches the query content in each index information fragment, where the different index information fragments respectively correspond to different searchable vertical domains in the N1 searchable vertical domains.

The search module performs a search in the N1 index information fragments based on the error-corrected content, and the understanding results and the matching manners that correspond to the M1 searchable fields, to determine a document that successfully matches the query content in each index information fragment. This process includes: For each of various index information fragments, the search module separately performs matching between an index corresponding to each field in the index information fragment and an understanding result corresponding to the field; determines a field value or an extended value that is in the index corresponding to the field in the index information fragment and that successfully matches the understanding result corresponding to the field; and returns a document associated with the successfully matched field value or extended value. Matching is performed between an index corresponding to each field among indexes corresponding to various fields and an understanding result corresponding to the field in a matching manner corresponding to the field. For content of the matching manner and content of performing matching in the matching manner, refer to the foregoing description of related content. Details are not described herein again.

In addition, when the search module separately performs matching between an index corresponding to each field in one index information fragment and an understanding result corresponding to the field, the search module may further determine a query error correction value corresponding to the index information fragment, so as to further determine whether the index information fragment uses an error-corrected result. When the index information fragment uses the error-corrected result, the search module may further separately perform matching between an index corresponding to each field in the index information fragment and the error-corrected result; determine a field value or an extended value that is in the index corresponding to the field in the index information fragment and that successfully matches the error-corrected result; and return a document associated with the successfully matched field value or extended value.

Step S107 is described below by using an example based on FIG. 18.

As shown in FIG. 18, an example in which the query content is "note plam", error-corrected content is "note plan", N1 searchable vertical domains include an "application function" vertical domain and a "note" vertical domain, and M1 searchable fields include a "title" field and a "description" field is used herein for description. The N1 index information fragments herein include an index information fragment (an index information fragment 1) corresponding to the "application function" vertical domain and an index information fragment (the index information fragment 2) corresponding to the "note" vertical domain.

For the index information fragment 1, the search module may perform matching between an index corresponding to the "title" field in the index information fragment 1 and an understanding result (an understanding result 1) corresponding to the "title" field in a matching manner 1 (corresponding to the "title" field); determine a field value or an extended value that is in the index corresponding to the "title" field and that successfully matches the understanding result corresponding to the "title" field; and return a document (corresponding to the "application function" vertical domain) associated with the successfully matched field value or extended value. The search module may further perform matching between an index corresponding to the "description" field in the index information fragment 1 and an understanding result (an understanding result 2) corresponding to the "description" field in a matching manner 2 (corresponding to the "description" field); determine a field value or an extended value that is in the index corresponding to the "description" field and that successfully matches the understanding result corresponding to the "description" field; and return a document (corresponding to the "application function" vertical domain) associated with the successfully matched field value or extended value.

The search module may further determine that the "application function" vertical domain may use the error-corrected content. In this case, the search module may further perform matching between the error-corrected content and each of the index corresponding to the "title" field and the index corresponding to the "description" field in the index information fragment 1; and return a document (corresponding to the "application function" vertical domain) associated with the successfully matched field value or extended value.

For the index information fragment 2, the search module may perform matching between an index corresponding to the "title" field in the index information fragment 2 and an understanding result (an understanding result 1) corresponding to the "title" field in a matching manner 1 (corresponding to the "title" field); determine a field value or an extended value that is in the index corresponding to the "title" field and that successfully matches the understanding result corresponding to the "title" field; and return a document (corresponding to the "note" vertical domain) associated with the successfully matched field value or extended value. The search module may further perform matching between an index corresponding to the "description" field in the index information fragment 2 and an understanding result (an understanding result 2) corresponding to the "description" field in a matching manner 2 (corresponding to the "description" field); determine a field value or an extended value that is in the index corresponding to the "description" field and that successfully matches the understanding result corresponding to the "description" field; and return a document (corresponding to the "note" vertical domain) associated with the successfully matched field value or extended value.

The search module may further determine that the "note" vertical domain does not use the error-corrected content. In this case, the search module does not perform matching between the error-corrected content and each of the index corresponding to the "title" field and the index corresponding to the "description" field in the index information fragment 2.

It should be understood herein that, searching N1 index information fragments for an understanding result corresponding to one searchable field in a matching manner corresponding to the searchable field, and determining a document that successfully matches the query content in each index information fragment may be understood as searching the N1 index information fragments for the understanding result corresponding to the searchable field in the matching manner corresponding to the searchable field, and determining a document that is in the index information fragment and that is associated with an index value (including a field value and an extended value) that successfully matches the understanding result corresponding to the searchable field. Because the understanding result corresponding to one searchable field may be used to represent the query content, the document that successfully matches the understanding result corresponding to the searchable field is also the document that successfully matches the query content.

S108: The search module uses the successfully matched document in each index information fragment as a search result, and aggregates various search results based on a vertical domain to obtain search results corresponding to N2 searchable vertical domains.

Each search result corresponds to a vertical domain to which the field value or the extended value associated with the search result belongs.

The search module may aggregate search results corresponding to a same vertical domain into one group, to obtain the search results corresponding to the N2 searchable vertical domains.

S109: The search module notifies the search response module to separately perform correlation analysis on the query content and each of the search results corresponding to the N2 searchable vertical domains, to determine a search result with a correlation meeting a requirement in the N2 searchable vertical domains.

In some possible cases, a search result with a correlation meeting a requirement in one searchable vertical domain may include first E search results having a highest correlation with the query content in various search results of the searchable vertical domain. E is an integer greater than or equal to 1.

In some possible implementations, among various search results of one searchable vertical domain, a search result having a largest quantity of times of successful matching with the index corresponding to the searchable vertical domain is a search result having a highest correlation with the query content in various search results of the searchable vertical domain. That one search result successfully matches the index corresponding to the searchable vertical domain once includes: When matching is performed between the query content and an index corresponding to each field in the searchable vertical domain, the search result is returned based on a successfully matched field value or index value.

S110: The search response module returns, to the search application, a search result with a correlation meeting a requirement in the N2 searchable vertical domains.

S111: The search application performs displaying based on the search result with a correlation meeting a requirement in the N2 searchable vertical domains.

For an example of displaying the search result with a correlation meeting a requirement in the N2 searchable vertical domains, refer to the foregoing user interface 73 shown in FIG. 7B(1) and FIG. 7B(2) and the related description of FIG. 7B(1) and FIG. 7B(2).

The search application may display, in one display box, field values corresponding to some or all fields in various search results that come from the same vertical domain in the N2 searchable vertical domains and whose correlation meets a requirement. The display box may further include a vertical domain name. Generally, a sequential relationship instead of an up-down relationship is presented when a field value (an icon) corresponding to an "icon" field in one search result and a field value corresponding to another field in the search result are displayed in the display box. In this way, an application, a service, or the like from which the field value corresponding to the another field may be highlighted based on an icon.

It should be understood herein that, in addition to being invoked by a global search application and a local search application to perform a search, the foregoing search service application may be further invoked by an application having an intra-application search function. For example, an application such as a "gallery" application or a "note" application may be an application having an intra-application search function. The application having an intra-application search function may obtain the query content, and invoke the search service application to perform a search in a target index information fragment based on the query content. After obtaining a search result, the search service application may return a search result with a correlation meeting a requirement to the application having an intra-application search function. Then, the application having an intra-application search function may perform displaying based on the query result. The target index information fragment may be an index information fragment corresponding to the application having an intra-application search function. An index of the target index information fragment is constructed based on content (for example, dynamic function data and service data) generated by the application having an intra-application search function. The target index information fragment may be an index information sub-file accessible by the application having an intra-application search function. The index information sub-file accessible by the application having an intra-application search function records the content (for example, the dynamic function data and the service data) generated by the application having an intra-application search function.

For ease of description, the application having an intra-application search function is as an application 4 below. When the application 4 invokes the search service application to perform a search, the application 4 is actually a search application.

In some possible cases, for a process in which the application 4 invokes the search service application to perform a search, refer to the foregoing related descriptions of step S101-step S111. Details are not described herein again. A difference lies in that a searchable vertical domain corresponding to the application 4 is content generated by the application 4 after being enabled. For example, when the application 4 is the "note" application, the searchable vertical domain corresponding to the application 4 is a "note" vertical domain. In this case, the application 4 may obtain an index information sub-file corresponding to the application 4 from an index information file to perform a search, and the index information sub-file corresponding to the application 4 is used to record the content (for example, the dynamic function data and the service data) generated by the application 4 after being enabled.

In some other possible cases, when the query content includes L query words, the process in which the application 4 invokes the search service application to perform a search may be different from step S101-step S111 described above. Instead, the following manner is used: The application 4 may customize one or more of a query understanding manner or a matching manner for performing a search based on the query content. Then, the query content, and the query understanding manner and the matching manner for performing a search based on the query content are transmitted to the search service application. Then, the search service application may query, by using the query content, and the query understanding manner and the matching manner for performing a search based on the query content, content related to the query content in the application 4 in the search information sub-file corresponding to the application 4. For example, the matching manner may be defined as separately performing a search based on L query words, that is, the L query words are mutually independent. In this way, search results corresponding to a plurality of L query words can be returned through one search. L may be an integer greater than or equal to 2.

That the query content includes L query words may be understood as follows: Two adjacent query words in the L query words have special symbols such as spaces during inputting. It may be further understood that two adjacent query words in the L query words have a time difference greater than a preset time during inputting.

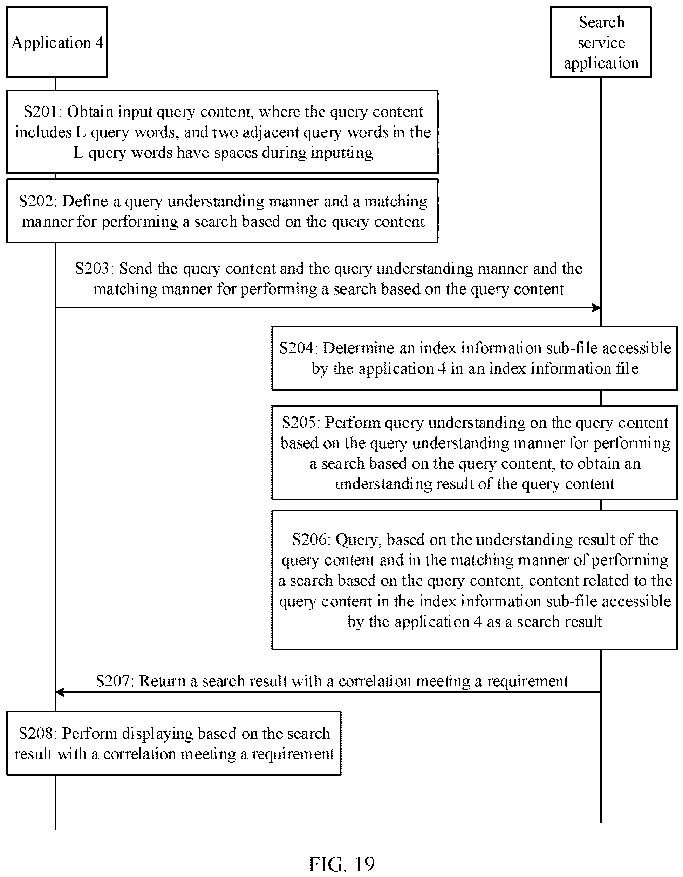

**FIG. 19** **is a schematic diagram of performing a search when query content includes L query words.**

In some possible cases, for a process of performing a search when the query content includes L query words, refer to the following descriptions of step S201-step S208 in FIG. 19.

S201: The application 4 obtains input query content, where the query content includes L query words, and two adjacent query words in the L query words have spaces during inputting.

It should be understood that step S201 is described by using an example in which two adjacent query words in the L query words have spaces during inputting. Actually, another case may alternatively be used. For details, refer to the foregoing content. Details are not described herein again.

In response to an operation of inputting L query words in the application 4, the application 4 obtains the L query words as the query content.

S202: The application 4 defines the query understanding manner and the matching manner for performing a search based on the query content.

The application 4 may define, by invoking a custom search interface, the query understanding manner and the matching manner for performing a search based on the query content.

S203: The application 4 sends, to the search service application, the query content and the query understanding manner and the matching manner for performing a search based on the query content.

S204: The search service application determines an index information sub-file accessible by the application 4 in the index information file.

The index information sub-file accessible by the application 4 records the content (for example, the dynamic function data or the service data) generated by the application 4 after being enabled. For example, when the application 4 is the "gallery" application, the searchable vertical domain corresponding to the application 4 is a "gallery" vertical domain. In this case, the application 4 may obtain the index information sub-file corresponding to the application 4 from the index information file to perform a search. In this case, the index information sub-file corresponding to the application 4 may be used to record an image generated by the application 4 after being enabled and information about the image.

S205: The search service application performs query understanding on the query content based on the query understanding manner for performing a search based on the query content, to obtain an understanding result of the query content.

Related content of step S205 is similar to the foregoing process of creating the understanding result corresponding to the searchable field in step S106. Refer to the foregoing process of creating the understanding result corresponding to the searchable field in step S106. Details are not described herein again.

S206: The search service application queries, based on the understanding result of the query content and in the matching manner of performing a search based on the query content, content related to the query content in the index information sub-file accessible by the application 4 as a search result.

The search service application queries, based on the understanding result of the query content and in the matching manner of performing a search based on the query content, a document associated with an index value (including a field value or an extended value) that successfully matches the understanding result of the query content in the index information sub-file accessible by the application 4 as the search result.

S207: The search service application returns a search result with a correlation meeting a requirement to the application 4.

S208: The application 4 performs displaying based on the search result with a correlation meeting a requirement.

It should be noted that the application 1 and the application 2 in the foregoing content may be a same application. The application 1 and the application 3 may also be a same application. The application 4 may be any application in the foregoing application 1-application 3, or may be another application.

It should be further noted that the index template mentioned in the foregoing content is not mandatory. The electronic device may create the index information file in a manner in which attributes corresponding to all fields are the same, so that content of the application can be searched for without starting the application.

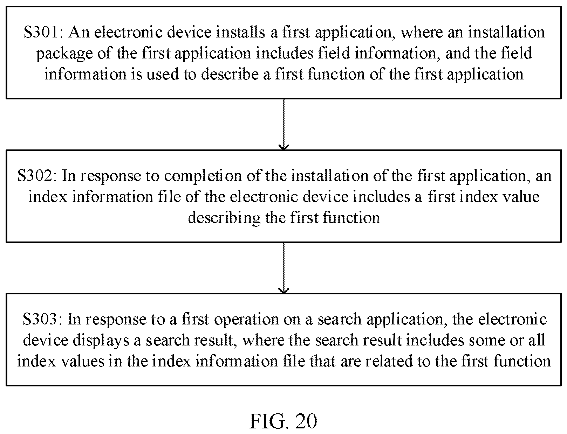

**FIG. 20** **is an example flowchart in which an electronic device obtains an index information file and performs a search based on the index information file.**

For a process in which the electronic device obtains the index information file and performs a search based on the index information file to obtain the search result, refer to the following descriptions of step S301-step S303.

S301: The electronic device installs a first application, where an installation package of the first application includes field information, and the field information is used to describe a first function of the first application.

The first application may be the foregoing application 1. For example, the first application may be a "note" application or a "video" application.

The first function may be a function that may be provided by the first application after being installed. The first function is a function that the first application has before the first application is enabled for the first time, and is not generated in a process of running the application. It may alternatively be understood that the first function may be a static function provided by the first application.

The field information of the first application may be recorded in the search configuration file in the installation package. For descriptions of the field information and the search configuration file, refer to the descriptions of related content in the content. Details are not described herein again.

When the first application is the "note" application, for an example of displaying the field information, reference may be made to the foregoing content shown in (2) in FIG. 3E.

S302: In response to completion of the installation of the first application, the index information file of the electronic device includes a first index value describing the first function.

The first index value is an index value created by the electronic device based on the field information.

In response to completion of the installation of the first application, the electronic device creates an index value based on the field information to obtain the first index value. For a process in which the electronic device creates the index value based on the field information, refer to the foregoing descriptions of step S16-step S22. Details are not described herein again.

In some possible cases, in addition to creating the first index value based on the field information, the electronic device may further create a first document based on the field information. The first document may include a field in the field information describing one first function and a field value corresponding to the field, and the first document is associated with the first index value. For a process of generating the first document, refer to the foregoing descriptions of step S22 and related content. Details are not described herein again.

A manner of determining completion of the installation of the first application includes but is not limited to: The electronic device initiates a broadcast indicating completion of the installation of the first application, the electronic device includes an icon of the first application, or the like.

S303: In response to a first operation on a search application, the electronic device displays a search result, where the search result includes some or all index values in the index information file that are related to the first function.

The first operation may be the foregoing operation of inputting the query content in the search box of the search application. The electronic device may search the index information file based on the query content, determine an index value related to the query content, and return a document corresponding to the index value as a search result. For example, the search result may include some or all index values related to the first function, and the some or all index values are recorded in a document associated with the some or all index values.

As shown in FIG. 7E, the first function may be a "create to-do" function in the "note" application. When the query content ("new to-do") is input in the search application, the electronic device may perform displaying based on the search result to obtain a user interface 76. The user interface 76 may include some index values describing the "create to-do" function, for example, a field value of "create to-do".

In some possible cases, in a process of performing step S303, the first application may be in a running state, or may be in a non-running state. This is not limited in this embodiment of this application.

In some possible cases, the index information file may include the first index value created based on the field information, and may further include a second index value created based on the field information of the second application. The second index value may be used to describe a second function of the second application. The second function of the second application is a function that can be provided by the second application after being installed. The second function is a function that the second application has before the second application is enabled for the first time, and is not generated in a process of running the application. It may alternatively be understood that the second function may be a static function provided by the second application.

In some possible cases, the index information file includes the foregoing first index value and second index value, and may further include an index value (a third index value) obtained based on first content that is generated by the first application after being installed. The first content may include service data and dynamic function data that are generated by the first application. This is not limited in this embodiment of this application. When the first content includes a new field (a custom field), the electronic device may further create an index value for a field value corresponding to the new field in an index construction manner that corresponds to the new field and that is set by the first application. For a process of creating the third index value based on the first content, refer to the foregoing descriptions of step S30-step S35, and further refer to the foregoing descriptions of step S40-step S46. Details are not described in this embodiment of this application again.

With reference to the foregoing content, it should be understood that, in some possible cases, when the third index value is obtained based on the first content, a second document may be further obtained based on the first content, where the second document includes a field in the first content and a field value corresponding to the field. The second document is associated with the third index value. For related content of creating the second document, refer to the foregoing description of step S35 or step S46. Details are not described herein again.

When the index information file is divided into at least one sub-file based on a vertical domain, and each sub-file corresponds to one file path, the electronic device may record the first index value and the second index value into the first sub-file in the index information file based on a first file path. The first sub-file may be the foregoing static function sub-file.

It should be understood herein that, in addition to recording the first index value, the first sub-file may further record the foregoing first document, and may further record a document obtained based on the field information in the second application.

In addition to the first sub-file, the index information file may further include a second sub-file, and the second sub-file may be used to record the third index value. Alternatively, the second sub-file may be further used to record the third index value and the second document.

It should be understood that an index value (a fourth index value) created based on the content generated by the second application may be recorded in an index information sub-file (a third sub-file) corresponding to the second application.

**An example electronic device provided in an embodiment of this application is described below.**

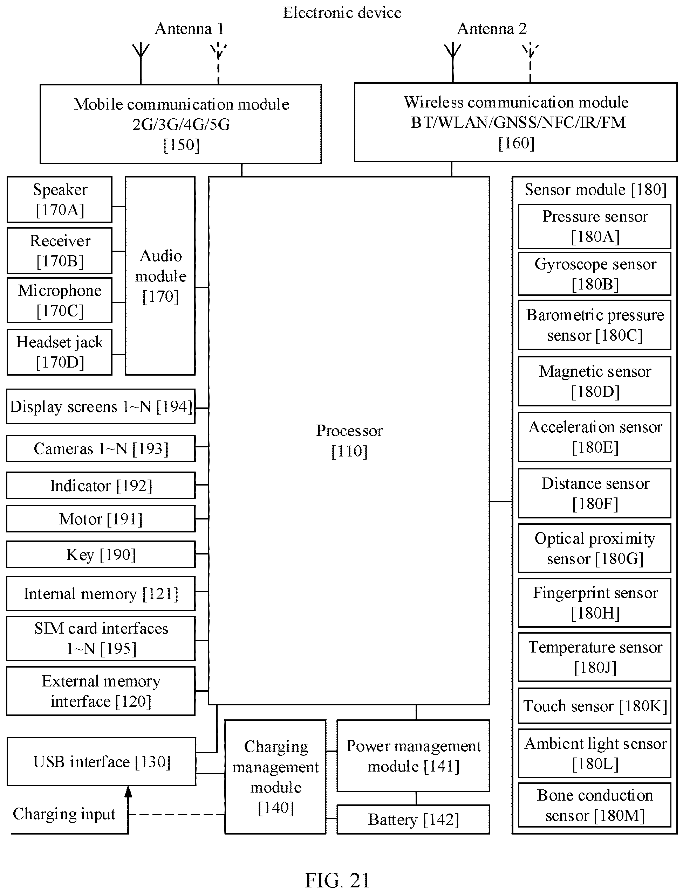

**FIG. 21** **is a schematic diagram of a structure of an electronic device according to an embodiment of this application.**

The embodiments are specifically described below by using the electronic device as an example. It should be understood that the electronic device may have more or fewer components than those shown in FIG. 21, may combine two or more components, or may have different component configurations. The various components shown in FIG. 21 may be implemented in hardware that includes one or more signal processing and/or application-specific integrated circuits, software, or a combination of hardware and software.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, and a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of this application does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device. The controller may generate an operation control signal based on instruction operation code and a timing signal, to complete control of instruction fetching and instruction execution.

A memory may be further disposed in the processor 110 to store instructions and data.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, and the like.

It may be understood that the interface connection relationship between the modules illustrated in this embodiment of this application is merely an example for description, and does not constitute a limitation on the structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from a charger.

The power management module 141 is configured to connect to the battery 142, the charging management module 140, and the processor 110.

A wireless communication function of the electronic device may be implemented by using the antenna 1, the antenna 2, the mobile communication module 150, the wireless communication module 160, the modem processor, the baseband processor, and the like.

In some embodiments, in the electronic device, the antenna 1 is coupled to the mobile communication module 150, and the antenna 2 is coupled to the wireless communication module 160, so that the electronic device can communicate with a network and another device by using a wireless communication technology. The wireless communication technology may include a global system for mobile communications (global system for mobile communications, GSM), a general packet radio service (general packet radio service, GPRS), and the like.

The electronic device implements a display function by using the GPU, the display screen 194, the application processor, and the like.

The display screen 194 is configured to display an image, a video, and the like. The display screen 194 includes a display panel.

The electronic device may implement a shooting function by using the ISP, the camera 193, the video codec, the GPU, the display screen 194, the application processor, and the like.

The electronic device may implement an audio function by using the audio module 170, the speaker 170A, the receiver 170B, the microphone 170C, the headset jack 170D, the application processor, and the like, for example, implement music playback and audio recording.

The touch sensor 180K is also referred to as a "touch panel". The touch sensor 180K may be disposed in the display screen 194. The touch sensor 180K and the display screen 194 constitute a touchscreen, which is also referred to as a "touch control screen".

The key 190 includes a power-on/off key, a volume key, or the like. The key 190 may be a mechanical key.

The motor 191 may generate a vibration prompt.

The indicator 192 may be an indicator light, may be configured to indicate a charging status or a power change, and may be further configured to indicate a message, a missed incoming call, a notification, and the like.

The SIM card interface 195 is configured to connect to a SIM card.

In this embodiment of this application, the processor 110 may invoke the computer instructions stored in the internal memory 121 to enable the terminal to perform the search method in the embodiment of this application.

The foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in the embodiments of this application.

As used in the foregoing embodiments, based on the context, the term "when ..." may be interpreted as a meaning of "if ...", "after ...", "in response to determining ...", or "in response to detecting ...". Similarly, based on the context, the phrase "when determining ..." or "if detecting (a stated condition or event)" may be interpreted as a meaning of "if determining ...", "in response to determining ...", "when detecting (a stated condition or event)", or "in response to detecting ... (a stated condition or event)".

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the procedures of the methods in the foregoing embodiments are implemented. The procedures may be completed by a computer program instructing related hardware. The program may be stored in a computer-readable storage medium. When the program is executed, the procedures in the foregoing method embodiments may be included. The foregoing storage medium includes any medium that can store program code, for example, a ROM, a random access memory RAM, a magnetic disk, or an optical disc.

## Claims

1. A search method, wherein the method comprises:
installing, by an electronic device, a first application, wherein an installation package of the first application comprises field information, and the field information is used to describe a first function of the first application;
in response to completion of the installation of the first application, an index information file of the electronic device comprises a first index value describing the first function, the first index value is related to the field information, and the index information file further comprises a second index value describing a second function of a second application; and
in response to a first operation on a search application, displaying, by the electronic device, a search result, wherein the search result comprises some or all index values in the index information file that are related to the first function, and the first application is in a non-running state.

2. The method according to claim 1, wherein the method further comprises:
in response to a second operation on the search application, displaying, by the electronic device, a search result, wherein the search result comprises some or all index values in the index information file that are related to the first function, and the first application is in a running state.

3. The method according to claim 1 or 2, wherein the first index value comprises an index value corresponding to a field value in the field information, and an index value corresponding to one field value comprises the field value itself, or further comprises an extended value of the field value.

4. The method according to any one of claims 1-3, wherein the method further comprises:
recording, by the electronic device, the first index value and the second index value into a first sub-file of the index information file based on a first file path, wherein the first file path carries a name of the index information file and a name of the first sub-file.

5. The method according to claim 4, wherein the first sub-file further comprises a first document created by the electronic device based on the field information, wherein the first document comprises a field in the field information describing one first function and a field value corresponding to the field, and the first document is associated with the first index value.

6. The method according to any one of claims 1-5, wherein the method further comprises:
after the electronic device runs the first application to generate first content, the index information file further comprises a third index value describing the first content.

7. The method according to claim 6, wherein after the first application generates the first content, a new field is added to the index information file, wherein an index value corresponding to the new field is obtained in an index construction manner preset by the first application, and the index value corresponding to the new field is comprised in the third index value.

8. The method according to claim 7, wherein before the new field is added to the index information file, the method further comprises:
adding, by the electronic device, the index construction manner preset by the first application to the index template.

9. The method according to claim 8, wherein the method further comprises:
adding, by the electronic device, a matching manner corresponding to the new field to the index template, wherein the matching manner corresponding to the new field is used to specify a manner of performing matching between the index value corresponding to the new field and query content, and the query content is content obtained when the first operation is detected in the search application.

10. The method according to claim 8, wherein the method further comprises:
adding, by the electronic device, a matching manner and a query understanding manner that correspond to the new field to the index template, wherein the query understanding manner corresponding to the new field is used to specify a manner of performing query understanding on the query content to obtain an understanding result, the matching manner corresponding to the new field is used to specify a manner of performing matching between the index value corresponding to the new field and the understanding result, and the query content is content obtained when the first operation is detected in the search application.

11. The method according to any one of claims 7-10, wherein the method further comprises:
recording, by the electronic device, the third index value into a second sub-file of the index information file based on a second file path, wherein the second file path carries a name of the index information file and a name of the second sub-file.

12. The method according to claim 11, wherein the second sub-file further comprises a second document created by the electronic device based on the first content, the second document comprises a field in the first content and a field value corresponding to the field, and the second document is associated with the third index value.

13. The method according to claim 11 or 12, wherein the index information file further comprises a third sub-file in addition to the second sub-file, the third sub-file is used to record a fourth index value, and the fourth index value is used to describe content generated by the second application after running.

14. The method according to any one of claims 7-13, wherein after the first application generates the first content, the method further comprises:
sending, by the first application, the first content to a search service application by invoking a first interface; and
recording, by the search service application, the first content into the index information file.

15. The method according to claim 7, wherein after the first application generates the first content, the method further comprises:
recording, by the first application, the first content into a database corresponding to the first application;
obtaining, by a search service application, the first content from the database; and
recording, by the search service application, the first content into the index information file.

16. The method according to claim 14 or 15, wherein the recording, by the search service application, the first content into the index information file specifically comprises:
creating, by the search service application, an index value for a field value corresponding to a field in the first content based on the index construction manner corresponding to the field in the first content, to obtain the third index value, wherein the field in the first content comprises the new field, and index construction manners corresponding to different fields in the first content are different; and
recording, by the search service application, the third index value into the index information file.

17. An electronic device, comprising one or more processors and a memory, wherein the memory is coupled to the one or more processors, the memory is configured to store computer program code, the computer program code comprises computer instructions, and the one or more processors invoke the computer instructions to enable the electronic device to perform the method according to any one of claims 1 to 16.

18. A computer-readable storage medium comprising instructions, wherein when the instructions are run on an electronic device, the electronic device is enabled to perform the method according to any one of claims 1 to 16.
